# EUROPÄISCHE PATENTSCHRIFT

(11) **EP 2 411 435 B1**
(45) Veröffentlichungstag und Bekanntmachung des Hinweises auf die Patenterteilung: **25.09.2013**
(21) Anmeldenummer: 09779205.5
(22) Anmeldetag: 25.03.2009
(51) Int. Cl.: C08G 18/40, C08G 18/83, C08L 75/04, H01B 3/30

(54) **POLYURETHANGELE UND VERFAHREN ZU IHRER HERSTELLUNG**
POLYURETHANE GELS AND METHOD FOR THE PRODUCTION THEREOF
GELS DE POLYURÉTHANNE ET LEUR PROCÉDÉ DE FABRICATION

(43) Veröffentlichungstag der Anmeldung: 01.02.2012
(73) Patentinhaber: GT Elektrotechnische Produkte GmbH, 79761 Waldshut-Tiengen (DE)
(72) Erfinder: TSONEV, Tsvetomir, 15745 Wildau (DE); PAULMANN, Uwe, 79790 Küssaberg (DE); BEHRENDT, Gerhard, 12437 Berlin (DE)
(74) Vertreter: Gulde Hengelhaupt Ziebig & Schneider
(86) Internationale Anmeldenummer: PCT/EP2009/053517
(87) Internationale Veröffentlichungsnummer: WO 2010/108541

(56) Entgegenhaltungen:
- EP-A1- 1 209 189
- WO-A1-96/00754
- WO-A1-2006/008422
- WO-A2-02/062863
- DE-A1-102004 014 165

## Beschreibung

Diese Erfindung betrifft Polyurethangele, die mittels spezieller Zusammensetzung und spezieller Additive auf verschiedenartige Funktionen in einer Vielzahl von Anwendungsbereichen eingestellt werden können, sowie Verfahren zu ihrer Herstellung.

So genannte Polyurethangele sind bekannt. Es handelt sich hierbei in der Regel um elastische Polyurethane mit Shore-A-Härten im Bereich 40 bis 70, die auf Polyetherbasis mit Di- und/oder Polyisocyanaten in der Regel mit einem Isocyanatindex weit unter 100, vielfach sogar unter 50, hergestellt werden. Solche Polyurethangele werden z. B. in der Prothetik, im Sportbereich (Fahrradsättel) und bei Kabeldurchführungen eingesetzt.

Nach dem bekannten Stand der Technik werden Polyurethangele z. B. in der Medizintechnik (Dekubitus) oder im Sportbereich seit den 60er Jahren eingesetzt. Diese Polyurethangele basieren auf der Kombination von zwei Polyetheralkoholen mit unterschiedlicher Hydroxylzahl - in der Regel ein typisches trifunktionelles Weichschaumpolyol und ein typischer tri- oder höherfunktioneller Hartschaumpolyetheralkohol - zum Teil auch mit Polyoxypropylenglykolen sowie di- oder trifunktionellen Isocyanaten oder Gemischen mit Isocyanatindices unter 50, d. h. mit einem beträchtlichen Isocyanatunterschuss. In einzelnen Beispielen werden an Stelle der Hartschaumpolyetheralkohole auch Polyesteralkohole verwendet, in der Regel Standardprodukte für die Lack- oder Elastomerherstellung. Nach FAPU 45, S. 5 (Nov. 2007) sind seit kurzem auch Polyurethangele für die Elektrotechnik, allerdings nicht für die elektrische Isolation, sondern als Abdichtung für Wanddurchführungen, bekannt. Diese Materialien sollen sich sanft jeder Kabelkontur anpassen, auch bei kleinsten Kabeldurchmessern. Außerdem soll das Material über eine ausgezeichnete Kälteflexibilität und hohen Bewegungsausgleich verfügen.

So werden in der EP 0 057 838 z. B. Gelpolster zur Vermeidung des Dekubitus beschrieben, die aus einem Gel und einer flexiblen, elastischen Umhüllung bestehen, wobei das Gel aus bis zu 62 % einer hochmolekularen Matrix aus kovalent vernetztem Polyurethan und bis zu 85 % eines über Nebenvalenzen gebundenen flüssigen Dispersionsmittels aufgebaut ist. In der EP 0 511 570 werden verbesserte Gelmassen als Reaktionsprodukte aus Polyolen und Polyisocyanaten beschrieben, bei denen eine Polyolkomponente aus mehreren Polyolen der Hydroxylzahlen unter 112 sowie solchen mit Hydroxylzahlen im Bereich 112 bis 600 mg KOH/g bestehen und der Isocyanatindex des Gemisches zwischen 15 und 70 liegt. Nach KR 1020060033464 kann die Verarbeitung der Gele mit Zwei-Komponenten-Maschinen erfolgen, die mit unterschiedlich temperierten Vorratsbehältern ausgerüstet sind. Weiterhin werden nach DE-PS 199 57 397 Polyurethangele als Verbunde mit viskoelastischen Schaumstoffen beschrieben, bei denen das Gel aus einem oder mehreren Polyolen mit Hydroxylzahlen unter 112 mg KOH/g und einem oder mehreren Polyolen mit Hydroxylzahlen im Bereich von 112 bis 600 mg KOH/g bei einem Gewichtsverhältnis der Komponenten zwischen 90 : 10 und 10 : 90 sowie ggf. bekannter Füll- und Zusatzstoffe hergestellt wird. Die Polyurethangele können nach der Lehre der DE OS 100 16 539 auch mit expandierendem Calciumcarbonat gefüllt sein, um ein niedrigeres Raumgewicht zu erhalten. Zur Anwendung bei Schuhen können Polyurethangele gemäß der Lehre der EP 1 277 801 mit darin fein verteilten Phase-Change-Materialien, die z. B. aus kristallinen, gesättigten Kohlenwasserstoffen bestehen, eingesetzt werden.

Nach der Lehre der DE-OS 10 2004 048 154 können zwei Räume gegeneinander flüssigkeits- und gasdicht abgedichtet werden, wenn der dichtende Körper als Gel und einer damit verbundenen Haut ausgebildet wird. Weiterhin wird in der DE GM 20 2007 002 809 U1 ein Kombinationswerkstoff aus mindestens zwei Werkstoffen beschrieben, bei denen ein Werkstoff ein Kautschukmaterial und das zweite ein Gel ist, die an einer Kontaktoberfläche eine innige Verbindung eingehen. Nach der DE OS 198 05 022 besteht eine weitere technische Lösung in Abdichtungssystemen für Bauwerke gegenüber Witterungseinflüssen, die aus hydrophilen Polyurethan-Prepolymeren und sich unter Einfluss von Wasser verfestigenden Bestandteilen bestehen.

Nach der Lehre der DE-OS 196 18 825 A1 werden hydrophile, selbstklebende Polyurethan-Gelmassen aus Polyetherpolyolen mit 2 bis 6 Hydroxylgruppen mit Hydroxylzahlen zwischen 20 und 112 mg KOH/g und einem Ethylenoxidgehalt von mehr als 10%, Antioxydantien, in den Polyolen löslichen Wismut-III-carboxylaten als Katalysatoren und Hexamethylendiisocyanat hergestellt, wobei das Produkt der Funktionalität der Polyurethan bildenden Komponenten mindestens 5,2 betragen soll.

WO 02 062863 offenbart die Herstellung eines Füllstoff enthaltenden Polyurethanschaumes aus PolymerMDI, Polypropylenglykol Molekulargewicht 2000 und Polypropylenglykol Molekulargewicht 425.

In WO 2006 008 422 werden elektrisch isolierende Polymeren offenbart die Füllstoffen enthalten die zum Teil einen Teilchengrösse haben im Mikrometerbereich und zum Teil einen Teilchengrösse haben im Nanobereich.

Die bisherigen technischen Lösungen beschreiben zwar im Detail die Herstellung von Polyurethangelen unter Verwendung einer Reihe für die Polyurethanchemie typischer Ausgangsstoffe. Es wurden bisher keine Polyurethangele mit einem höheren Flammschutz, einer Widerstandsfähigkeit gegenüber höheren elektrischen Feldstärken oder einer Isolationsfähigkeit gegenüber Mittelspannungen in der Elektrotechnik beschrieben bzw. es ist keine technische Lösung zur Mitverwendung oder alleinigen Verwendung von nanoteilchenhaltigen Polyetheralkoholen beschrieben oder bekannt geworden. Zusätzlich zu den o. g. Funktionen der Polyurethangele sind außer den oben im Stand der Technik beschriebenen keine weder durch die Struktur der verwendeten Polymere noch durch eingesetzte Zusatzstoffe bekannt.

Aufgabe dieser Erfindung ist es, Polyurethangele mit einer Reihe von Funktionen in Form eines Baukastens durch eine Kombination von Polyurethanstruktur und Zusatzstoff sowie ein Verfahren zu ihrer Herstellung zur Verfügung zu stellen.

Die Lösung der Aufgabe erfolgt mit Polyurethangelen, herstellbar durch Umsetzung eines Polyurethansystems umfassend
(A1) ein oder mehrere, überwiegend aus auf ein Startermolekül der Hydroxylfunktionalität zwischen 2 und 4 addierten Propylenoxid hergestellten Polyetheralkohole der Hydroxylzahl 28 bis 90 mg KOH/g,
(A2) ein oder mehrere, überwiegend aus auf ein Startermolekül der Hydroxylfunktionalität zwischen 2 und 4 addierten Propylenoxid hergestellten Polyetheralkohole der Hydroxylzahl 240 bis 850 mg KOH/g,
(B1) ein oder mehrere Diisocyanate,
(B2) ein oder mehrere Triisocyanate, die vorzugsweise durch Trimerisierung von Diisocyanaten hergestellt wurden,
(A3) mindestens einen Zusatzstoff, der eine vorgegebene Funktion erfüllt und
(A4) mindestens einen Zusatzstoff mit einer Teilchengröße im Bereich von 1 bis 650 nm
in Gegenwart von einem oder mehreren Katalysatoren (A5) für die Polyurethanbildung.

Das erfindungsgemäße Verfahren zur Herstellung von Polyurethangelen, ist dadurch gekennzeichnet, dass
(A1) ein Polyetheralkohol aus einem oder mehreren, überwiegend aus auf ein Startermolekül der Hydroxylfunktionalität zwischen 2 und 4 addierten Propylenoxid der Hydroxylzahl 28 bis 90 mg KOH/g,
(A2) ein Polyetheralkohol aus einem oder mehreren, überwiegend aus auf ein Startermolekül der Hydroxylfunktionalität zwischen 2 und 4 addierten Propylenoxid der Hydroxylzahl 240 bis 850 mg KOH/g,
(A5) ein oder mehrere Katalysatoren für die Polyurethanbildung,
(A3) mindestens ein Zusatzstoff, der eine vorgegebene Funktion erfüllt und
(A4) mindestens ein Zusatzstoff mit einer Teilchengröße im Bereich von 1 bis 650 nm
innig miteinander vermischt werden und anschließend mit
(B1) einem oder mehreren Diisocyanaten,
(B2) einem oder mehreren Triisocyanaten, die vorzugsweise durch Trimerisierung von Diisocyanaten hergestellt wurden,
im molaren Verhältnis von 1 : 0,5 bis 1 : 1,2 vermischt und zu einem Polyurethangel mit einer Shore-A-Härte zwischen 35 und 85 umgesetzt werden.

Vorteilhafte Weiterbildungen sind in den Unteransprüchen angegeben.

Eine Weiterbildung der Polyurethangele ist dadurch gekennzeichnet, dass als Polyetheralkohol (A1) ein auf einen 2- bis 4-funktionellen Starter ausschließlich mit Propylenoxid aufgepfropfter Polyetheralkohol mit einer Hydroxylzahl zwischen 44 und 90 mg KOH/g vorliegt.

Eine Ausgestaltung der Polyurethangele sieht vor, dass als Polyetheralkohol (A1) ein oligoharnstoffhaltiger langkettiger Polyetheralkohol, in dem die Oligoharnstoffe durch Depolymerisation von Polyurethan-Blockweichschaumstoffen durch Solvolyse mit einem Gemisch aus mindestens einem Glykol und mindestens einem sekundären aliphatischen Amin erzeugt werden, in einer Menge von 0,1 bis 25 Gew.-% vorliegt und einen Teilchendurchmesser von 1 bis 1000 µm aufweisen.

Eine vorteilhafte Weiterbildung der Polyurethangele ist dadurch gekennzeichnet, dass als Polyetheralkohol (A1) ein oligoharnstoffhaltiger langkettiger Polyetheralkohol, in dem die Oligoharnstoffe durch Depolymerisation von Polyurethan-Blockweichschaumstoffen durch Solvolyse mit einem Gemisch aus mindestens zwei Glykolen und mindestens einem sekundären aliphatischen Amin erzeugt werden, in einer Menge von 0,1 bis 15 Gew.-% vorliegt und einen Teilchendurchmesser von 1 bis 1000 nm aufweist.

Eine Ausgestaltung der Polyurethangele sieht vor, dass der Polyetheralkohol (A2) ein auf einen 2- bis 4-funktionellen Starter ausschließlich mit Propylenoxid aufgepfropfter Polyetheralkohol mit einer Hydroxylzahl zwischen 350 und 480 mg KOH/g ist.

Eine vorteilhafte Weiterbildung der Polyurethangele ist dadurch gekennzeichnet, dass der Polyetheralkohol (A2) ein auf einen 2- bis 4-funktionellen Starter ausschließlich mit Propylenoxid aufgepfropfter Polyetheralkohol und mit einer aliphatischen Dicarbonsäure im Unterschuss umgesetzter Polyetherester mit einer Hydroxylzahl zwischen 340 und 420 mg KOH/g ist.

Eine Ausgestaltung der Polyurethangele ist dadurch gekennzeichnet, dass als Triisocyanat (B2) ein teiltrimerisiertes Gemisch von aliphatischen, aralphatischen und/oder cycloaliphatischen, und mindestens einem aromatischen Diisocyanat vorliegt.

In einer Weiterbildung der Polyurethangele liegt das aromatische Diisocyanat (B2) mit 1 bis 15 Gew.-% im Gemisch vor.

Eine Ausgestaltung der Polyurethangele sieht vor, dass als Katalysatoren (A5) Bis-(dimethylaminoethyl)ether, Pentamethyldiethylentriamin, Dimorpholinodiethylether, Tris-(3-dimethylamino)propylamin, Pentamethylpropylentriamin, N-Methyldi-cyclohexylamin, N-Methylmorpholin, N,N'-Dimethylpiperazin und/oder 1-Dimethylaminoethyl-4-methyl-piperazin vorliegen.

Eine vorteilhafte Ausgestaltung der Polyurethangele sieht vor, dass das Polyurethansystem
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
(A5.1) 0,001 bis 0,5 Teile eines oder mehrerer Katalysatoren für die Polyurethanbildung enthält und weiterhin
(A3.1) 0,1 bis 15 Teile eines die Wärmeleitfähigkeit verbessernden Stoffes in mikronisierter Form, vorzugsweise Siliziumcarbid oder Graphit mit Teilchendurchmessern zwischen 0,1 und 500 µm, und
(A4.1) 0,01 bis 5 Teile eines nanoskaligen Schichtsilikats mit einer Teilchengröße im Bereich von 50 bis 650 nm
enthält.

Eine Weiterbildung der Polyurethangele ist dadurch gekennzeichnet, dass das Polyurethansystem
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
(A5.1) 0,001 bis 0,5 Teile eines oder mehrerer Katalysatoren für die Polyurethanbildung
enthält und weiterhin
(A3.2) 0,1 bis 15 Teile eines die elektrische Leitfähigkeit verbessernden Stoffes in mikronisierter Form, vorzugsweise jodbehandelter Kohlenstoff, Graphit oder Molybdänsulfid mit Teilchendurchmessern zwischen 0,1 und 500 µm, und
(A4.1) 0,01 bis 5 Teilen eines nanoskaligen Schichtsilikats mit einer Teilchengröße im Bereich von 50 bis 650 nm
enthält.

Eine Ausgestaltung der Polyurethangele sieht vor, dass das Polyurethansystem
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
(A5.1) 0,001 bis 0,5 Teile eines oder mehrerer Katalysatoren für die Polyurethanbildung
enthält und weiterhin
(A3.3) 1 bis 15 Teile eines flüssigen, pastösen oder gelartigen höhermolekularen Kohlenwasserstoffs mit hoher elektrischer Isolationsfähigkeit, vorzugsweise ein Mineralöl oder Vaseline, und
(A4.1) 0,01 bis 5 Teile eines nanoskaligen Schichtsilikats mit einer Teilchengröße im Bereich von 50 bis 650 nm
enthält.

Eine Ausgestaltung der erfindungsgemäßen Polyurethangele ist dadurch gekennzeichnet, dass das Polyurethansystem
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
(A5.1) 0,001 bis 0,5 Teile eines oder mehrerer Katalysatoren für die Polyurethanbildung
enthält und weiterhin
(A3.4) 2,5 bis 15 Teile eines die Flammfestigkeit verbessernden Stoffes in mikronisierter Form, vorzugsweise Melamin, Melamincyanurat, Melamin-Formaldehyd-Harz, Harnstoff-Formaldehydharz und/oder Polycyanuratharz mit Teilchendurchmessern zwischen 0,1 und 500 µm, und
(A4.1) 0,01 bis 5 Teilen eines nanoskaligen Schichtsilikats mit einer Teilchengröße im Bereich von 50 bis 650 nm
enthält.

Eine vorteilhafte Weiterbildung der Polyurethangele ist dadurch gekennzeichnet, dass das Polyurethansystem
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A6) 3 bis 18 Teile eines aliphatisch-aromatischen Polyesteralkohols der Hydroxylzahl 180 bis 320 mg KOH/g mit 2 bis 23 Gew.-% Aromatenanteil,
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
(A5.1) 0,001 bis 0,5 Teile eines oder mehrerer Katalysatoren für die Polyurethanbildung enthält und weiterhin
(A3.5) 0,1 bis 5 Teile eines modifizierten nativen Öls und
(A4.1) 0,01 bis 5 Teile eines nanoskaligen Schichtsilikats mit einer Teilchengröße im Bereich von 50 bis 650 nm
enthält.

Eine Ausgestaltung der erfindungsgemäßen Polyurethangele ist dadurch gekennzeichnet, dass das Polyurethansystem
(A1.2) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g mit zwischen 2 und 15 Gew.-% dispergierten Oligoharnstoffen der Teilchengröße 10 bis 1000 µm,
(A2.2) 25 bis 10 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(B1.1) 25 bis 42 Teilen eines oder mehrerer Diisocyanate,
(B2.1) 5 bis 15 Teile eines vorzugsweise durch Trimerisierung von Diisocyanaten hergestellten Triisocyanats,
(A5.1) 0,001 bis 0,5 Teilen eines oder mehrerer Katalysatoren für die Polyurethanbildung
enthält und weiterhin
(A3.5) 0,1 bis 5 Teilen eines modifizierten nativen Öls und
(A4.1) 0,01 bis 5 Teilen eines nanoskaligen Schichtsilikats mit einer Teilchengröße im Bereich von 50 bis 650 nm
enthält.

Eine Weiterbildung der Polyurethangele sieht vor, dass das Polyurethansystem
(A1.2) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g mit zwischen 2 und 15 Gew.-% dispergierten Oligoharnstoffen der Teilchengröße 10 bis 1000 nm,
(A2.2) 25 bis 10 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(B1.1) 25 bis 42 Teile eines oder mehrerer Diisocyanate,
(B2.2) 2,5 bis 10 Teile eines vorzugsweise durch Trimerisierung von Diisocyanaten hergestellten Triisocyanats,
(A5.1) 0,001 bis 0,5 Teile eines oder mehrerer Katalysatoren für die Polyurethanbildung enthält und weiterhin
(A4.1) 0,01 bis 5 Teile eines nanoskaligen Schichtsilikats mit einer Teilchengröße im Bereich von 50 bis 650 nm
enthält.

Eine Ausgestaltung des erfindungsgemäßen Verfahrens ist dadurch gekennzeichnet, dass als Polyetheralkohol (A1) ein oligoharnstoffhaltiger langkettiger Polyetheralkohol eingesetzt wird, in dem die Oligoharnstoffe durch Depolymerisation von Polyurethan-Blockweichschaumstoffen durch Solvolyse mit einem Gemisch aus mindestens einem Glykol und mindestens einem sekundären aliphatischen Amin erzeugt werden, in einer Menge von 0,1 bis 25 Gew.-% vorliegen und einen Teilchendurchmesser von 1 bis 1000 µm aufweisen.

Eine Weiterbildung des Verfahrens sieht vor, dass
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A3.1) 0,1 bis 15 Teile eines die Wärmeleitfähigkeit verbessernden Stoffes in mikronisierter Form, vorzugsweise Siliziumcarbid, Graphit oder Molybdänsulfid mit Teilchendurchmessern zwischen 0,1 und 500 µm, und
(A4.1) 0,01 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
zugesetzt, dieses Gemisch wiederum innig vermischt, einer Formgebung unterworfen und unter Formgebung gehärtet wird.

Eine Ausgestaltung des erfindungsgemäßen Verfahrens ist dadurch gekennzeichnet, dass
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A3.2) 0,1 bis 15 Teile eines die elektrische Leitfähigkeit verbessernden Stoffes in mikronisierter Form, vorzugsweise jodbehandelter Kahienstoff, Graphit oder Molybdänsulfid mit Teilchendurchmessern zwischen 0,1 und 500 µm, und
(A4.1) 0,01 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
zugesetzt, dieses Gemisch wiederum innig vermischt, einer Formgebung unterworfen und unter Formgebung gehärtet wird.

Eine Weiterbildung des Verfahrens sieht vor, dass
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A3.3) 2,5 bis 15 Teile eines die Flammfestigkeit verbessernden Stoffes in mikronisierter Form, vorzugsweise Melamin, Melamincyanurat, Melamin-Formaldehyd-Harz, Hamstoff-Formaldehydharz und/oder Polycyanuratharz mit Teilchendurchmessern zwischen 0,1 und 500 µm, und
(A4.1) 0,1 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
zugesetzt, dieses Gemisch wiederum innig vermischt, einer Formgebung unterworfen und unter Formgebung gehärtet wird.

Eine vorteilhafte Ausgestaltung des Verfahrens ist dadurch gekennzeichnet, dass
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A6) 3 bis 18 Teile eines aliphatisch-aromatischen Polyesteralkohols der Hydroxylzahl 180 bis 320 mg KOH/g mit 2 bis 23 Gew.-5 Aromatenanteil und
(A4.1) 0,1 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanate,
(B2.1) 5 bis 15 Teile eines vorzugsweise durch Trimerisierung von Diisocyanaten hergestellten Triisocyanats
zugesetzt, dieses Gemisch wiederum innig vermischt, einer Formgebung unterworfen und unter Formgebung gehärtet wird.

In einer Weiterbildung des Verfahrens werden
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A3.5) 0,1 bis 5 Teile eines modifizierten nativen Öls und
(A4.1) 0,01 bis 5 Teile eines nanoskaligen Schichtsilikats mit einer Teilchengröße im Bereich von 50 bis 650 nm
innig miteinander vermischt und zu diesem Gemisch
(B1.1) 25 bis 42 Teile eines oder mehrerer Diisocyanate,
(B2.1) 5 bis 15 Teile eines vorzugsweise durch Trimerisierung von Diisocyanaten hergestellten Triisocyanats
zugesetzt, dieses Gemisch wiederum innig vermischt, einer Formgebung unterworfen und unter Formgebung gehärtet.

Eine Ausgestaltung des Verfahrens ist dadurch gekennzeichnet, dass
(A1.2) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g mit zwischen 2 und 15 Gew.-% dispergierten Oligoharnstoffen der Teilchengröße 10 bis 1000 nm,
(A2.2) 25 bis 10 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung
(A4.1) 0,01 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanate,
(B2.1) 5 bis 15 Teile eines vorzugsweise durch Trimerisierung von Diisocyanaten hergestellten Triisocyanats
zugesetzt, dieses Gemisch wiederum innig vermischt, einer Formgebung unterworfen und unter Formgebung gehärtet wird.

Die erfindungsgemäßen Polyurethangele basieren auf einem Netzwerk, das sowohl in der Weichsegmentphase als auch in der Hartsegmentphase vernetzt ist und zusätzlich in der Weichsegmentphase aus zwei Netzwerken wesentlich unterschiedlicher Netzkettenabstände (charakterisiert durch die mittlere Molmasse zwischen den Netzwerkknoten) aus einem im wesentlichen einheitlich aufgebauten Polyetheralkoholgemisch mit dem hydrophoberen Strukturelement Propylenglykol sowie einer Vernetzung im Hartsegment über Triisocyanate besteht. Hierbei werden die Triisocyanate aus Gemischen von aliphatischen, cycloaliphatischen und/oder araliphatischen Diisocyanaten sowie mindestens einem aromatischen Diisocyanat in Gegenwart bestimmter Katalysatoren vorgebildet, wobei der Anteil an aromatischem Diisocyanat das Ausmaß der Trimerisierung des Isocyanatgemisches und damit den Grad der Vernetzung (Vernetzungsdichte) im Hartsegment bestimmt.

Das Verhältnis des Polyetheralkohls (A1) zum Polyetheralkohol (A2) bestimmt die Härte und Elastizität des Polyurethangels. Dieses Verhältnis liegt erfindungsgemäß zwischen (A1): (A2) wie 97 : 3 bis 65 : 35. Um eine Härte z. B. von Shore-A 80 zu erreichen, ist ein Verhältnis von (A1) zu (A2) von 72 : 28 erforderlich. Um eine Härte z. B. von Shore-A 35 zu erreichen, ist ein Verhältnis von (A1) zu (A2) von 93 : 7 erforderlich. Weiterhin wird bei abnehmender Härte unabhängig von der Stöchiometrie der Umsetzung mit dem Di- und/oder Triisocyanat und damit steigendem Anteil an Polyetheralkohol (A1) und steigendem Anteil an Triisocyanat beobachtet, dass die für die Polyurethangele erwünschte Haftfestigkeit ansteigt und somit durch das Verhältnis der Polyetheralkohole zueinander und den Anteil trifunktioneller Isocyanate gesteuert werden kann.

Das stöchiometrische Verhältnis von Hydroxylgruppen zu Isocyanatgruppen, das nach dem Stand der Technik bei 0,5 bzw. darunter liegen sollte, kann durch die erfindungsgemäße Arbeitsweise auch wesentlich darüber liegen und sogar über 1 betragen, was bei Polyurethangelen für die Elektrotechnik wegen des geforderten Oberflächenwiderstandes und der für den Mittelspannungsbereich erforderlichen Durchschlagspannung von Bedeutung ist, da die freien Hydroxylgruppen wesentlich zur Leitfähigkeit des Materials beitragen.

Als Katalysatoren (A5) zur Herstellung der Gele kommen in erster Linie bestimmte tertiäre Amine in Betracht, z. B. Bis-(dimethylaminoethyl)ether, Pentamethyldiethylentriamin, Dimorpholinodiethylether, Tris-(3-dimethylamino)propylamin, Pentamethylpropylentriamin, N-Methyldi-cyclohexylamin, N-Methylmorpholin, N,N'-Dimethylpiperazin, 1-Dimethylaminoethyl-4-methyl-piperazin. Andererseits sind auch metallorganische Verbindungen einsetzbar, z. B. Wismut- oder Bleiverbindungen wie die Carboxylate, z. B. Wismuttriacetat, Wismuttrioleat, Wismutsubsalizylat oder Wismutbis-neodecanoat sowie spezielle Zinnverbindungen, insbesondere solche, die thermisch aktivierbar sind, z. B. Dibutylzinnbis(2-ethyl-hexyl-thioglykolat). Diese Katalysatoren werden in Mengen zwischen 0,0001 und 1 Gew.-% bezogen auf das Polyetheralkoholgemisch eingesetzt.

Die Herstellung von teiltrimerisierten Diisocyanaten (B2) mit einstellbarem Trimerisierungsgrad erfolgt in Gemischen aus aliphatischen, cycloaliphatischen und/oder araliphatischen Diisocyanaten sowie mindestens einem aromatischen Diisocyanat. Die Menge an verwendetem aromatischen Di- und/oder Polyisocyanat bestimmt neben der Menge an Katalysator das Ausmaß der Trimerisierung. Erfindungsgemäß sollte das Verhältnis von aliphatischen, cycloaliphatischen und/oder araliphatischen Diisocyanaten und aromatischen Di- und/oder Polyisocyanat zwischen 98 : 2 und 80 : 20 liegen. Die Trimerisierung erfolgt durch Zusatz von 0,001 bis 0,5 Gew.-% einer bestimmten, die Trimerisierung von Isocyanaten katalysierenden Verbindung oder Kombinationen von Verbindungen. Für die Herstellung dieser Teiltrimerisate werden insbesondere bekannte Katalysatoren wie Tris-(2,4,6-dimethylmethyl)phenol, Tris-1,3,5-(dimethylaminopropyl)hexahydro-s-triazin, Tris-1,3,5-(diethylaminopropyl)hexahydro-s-triazin, Tris-1,3,5-(diethylaminobutyl)hexahydro-s-triazin, Kombinationen aus Triethylendiamin und Epoxyden verwendet. Das Verhältnis der aliphatischen, cycloaliphatischen und/oder araliphatischen Diisocyanate zu dem aromatischen Diisocyanat bestimmt das Ausmaß der Trimerisierung sowie die Lichtechtheit (UV-Stabilität) der Teiltrimerisate. In der Regel wird nur ein geringer Anteil zwischen 1 und 20 Teilen aromatisches Diisocyanat im Gemisch eingesetzt, wobei ein Anteil von 3 bis 12 Gew.-% besonders bevorzugt wird. So kann z. B. aus 89 Teilen 4,4'-Dicyclohexylmethandiisocyanat und 11 % 2,4-Toluylendiisocyanat in Gegenwart von 0,15 Gew.-% Tris-1,3,5-(diethylaminopropyl)hexahydro-s-triazin ein solches Teiltrimerisat mit einem Isocyanatgehalt von 14,3% und einer Viskosität von 4.870 mPas (25°C) hergestellt werden.

Durch den Einsatz unterschiedlicher Rezepturen ist es möglich, Polyurethangele mit bestimmten Funktionen herzustellen. Die unterschiedlichen Rezepturen sind aus den besonderen Ausgestaltungen der Erfindung im vorhergehenden Teil zu entnehmen.

Die Herstellung eines Polyurethangeles mit guter Wärmeleitung, das z. B. bei der Anwendung im medizinischen oder Sportbereich erforderlich ist, erfolgt durch Zusatz von die Wärmeleitfähigkeit verbessernden Stoffen in mikronisierter Form. Zweckmäßig ist es, diese Zusatzstoffe dem Polyurethansystem zuzufügen, bevor die B-Komponenten mit dem Gesamtsystem vermischt werden.

Eine weitere Funktion der Polyurethangele ist eine gute elektrische Leitfähigkeit, wie sie z. B. bei leitfähigen Bändern in Rohren zur Datenübertragung oder in Fahrzeugen zur Ableitung statischer Elektrizität erforderlich ist.

Eine weitere vorteilhafte Funktion der erfindungsgemäßen Polyurethangele ist z. B. ein verbesserter Flammschutz. So wird für Kabelvergussmassen auf Schiffen oder in Bergwerken eine Brennbarkeit nach DIN 4102 der Klasse B1 gefordert. Diese kann üblicherweise mit Kunststoffen wie Polyurethanen nur durch Einsatz von flüssigen oder festen halogen- und phosphorhaltigen Flammschutzmitteln zusätzlich zu einer Trimerisierung einer Vielzahl von Isocyanatgruppen erreicht werden. Erfindungsgemäße flammgeschützte Polyurethangele können eine Einstufung in die Klasse B1 der DIN 4102 erreichen, wenn sie mit festen mikronisierten stickstoffhaltigen Verbindungen oder Polymeren versetzt werden.

Eine weitere erfindungsgemäße Funktion der Polyurethangele ist eine verbesserte Haftung auf anderen Materialien, z. B. auf Kunststoffen, Metallen, Nichtmetallen, Keramiken und Glas. Eine Besonderheit der erfindungsgemäßen Polyurethangele sind solche, die unter Verwendung von oligoharnstoffhaltigen langkettigen Polyetheralkoholen hergestellt werden. Solcherart hergestellte Polyurethangele sind bisher nicht bekannt geworden und stellen eine bevorzugte Ausführungsform der Erfindung dar. Die oligoharnstoffhaltigen langkettigen Polyetheralkohole wiederum werden durch Depolymerisation von Polyurethan-Blockweichschaumstoffen durch Solvolyse mit einem Gemisch aus mindestens einem Glykol und mindestens einem sekundären aliphatischen Amin hergestellt. Dabei werden solche Bedingungen gewählt, die zu einem Dispersionspolyol mit einem Teilchendurchmesser der Oligoharnstoffe zwischen 1 und 1000 µm oder zu einem nanoteilchenhaltigen, klaren Polyol mit einem Teilchendurchmesser der Oligoharnstoffe zwischen 50 und 1000 nm führen.

Herstellbar sind auch Polyurethangele mit thixotropen Eigenschaften, die z. B. als Schmiergel Verwendung finden.

Polyurethangele mit höherer Elastizität werden durch Einsatz von Polyetheralkoholen mit nanoskaligen Oligoharnstoffen hergestellt. Dabei wird der Anteil der trifunktionellen Isocyanate etwas reduziert. Ein Polyurethangel mit verbesserter Elastizität, das z. B. im Sportbereich als Dämpfungsgel verwendet werden kann, ist oben näher beschrieben worden.

Eine weitere Besonderheit der erfindungsgemäßen Polyurethangele sind solche, die unter Verwendung von 1 bis 25 Gew.-% bezogen auf die Polyolkomponente an schwach verzweigten aromatischen Polyesteralkoholen auf der Basis aromatischer Dicarbonsäuren wie Terephthalsäure, Phthalsäure oder Isophthalsäure und zwischen 0,1 und 25 Gew.-% Glycerin sowie einem oder mehreren Glykolen hergestellt werden. Üblicherweise sind Gemische aus Polyetheralkoholen und Polyesteralkoholen instabil und trennen sich bereits kurze Zeit nach der Vermischung. Durch die spezielle Struktur der verzweigten aromatischen Polyesteralkohole, die als Strukturkomponenten neben der aromatischen Dicarbonsäure und einem Glykol eine aliphatische Dicarbonsäure und ein Diol mit einer sekundären und einer primären Hydroxylgruppe aufweisen, können stabile Mischungen mit den Polyetheralkoholen erzeugt werden, die weiter zu homogenen Polyurethangelen führen. Durch die Verwendung solcher verzweigter aromatischer Polyesteralkohole in Mengen von 1 bis 25 Gew.-% kann sowohl die Härte auf einen gewünschten höheren Wert als auch eine verbesserte Haftfestigkeit der Gele erzielt werden.

Die neuen Polyurethangele zeichnen sich durch auf den speziellen Anwendungsfall genau eingestellte Eigenschaften aus. Diese können durch die erfindungsgemäße Kombination von der Struktur der Basispolyurethane und der in ihnen dispergierten oder verteilten oder eingebauten Zusatzstoffe erzielt werden. Ein wesentliches Kriterium des erfindungsgemäßen Verfahrens ist, dass
- im Wesentlichen auf Propylenoxid basierende Polyether mit keinem oder maximal 5 Gew.-% Anteil an Ethylenoxid und
- die Stöchiometrie der Hydroxyl-Isocyanat-Reaktion im Wesentlichen ausgeglichen ist und nur in bestimmten Fällen, in dem eine extreme Weichheit der Gele gefordert wird, unterstöchiometrisch bis in den Bereich von 0,6 gearbeitet wird.

Die Herstellung der erfindungsgemäßen Gele folgt im Wesentlichen der in der Polyurethanchemie üblichen Verfahrensweise, dass
- eine Vormischung (Komponente) aus den Hydroxylverbindungen, den Katalysatoren und den Zusatzstoffen hergestellt und diese mit
- dem bzw. den Isocyanat(en) innig vermischt,
- ggf. in eine Form gegeben und
- in dieser bis zum gewünschten Grad gehärtet wird.

Dabei wird durch das Verhältnis der Polyether zueinander und dieser zu den Isocyanaten derart eingestellt, dass das Verhältnis der Hydroxylgruppen zu den Isocyanatgruppen im molaren Verhältnis von 1 : 0,5 bis 1 : 1,2 liegt und die Shore-A-Härte der erfindungsgemäßen Polyurethangele zwischen 35 und 85 liegt.

Eine besondere Ausführungsform der Erfindung betrifft Polyurethan-Gele mit extrem geringer Härte. Diese werden ausschließlich aus einer Kombination von kurz- und langkettigen Diolen sowie Triisocyanaten ggf. im Gemisch mit Diisocyanaten sowie weiteren Additiven und/oder Füllstoffen hergestellt. Diese Gele werden speziell hergestellt aus
- einem oder mehreren Polypropylenglykolen der Molmasse 800 bis 3000,
- Dipropylenglykol
- Katalysatoren, vorzugsweise thermosensiblen Zinnkatalysatoren,
- teiltrimerisierten aromatischen und/oder cycloaliphatischen Diisocyanaten,
- ggf. Füllstoffe, Pigmente, Öle oder feste Flammschutzmittel.

Insbesondere werden diese Gele hergestellt aus
- 1 Hydroxyläquivalent Polypropylenglykol 2000,
- 1 bis 8 Hydroxyläquivalenten Dipropylenglykol,
- 2 bis 9 Isocyanatäquivatenten eines teiltrimerisierten 4,4'-Diphenylmethandiisocyanats bzw. eines teiltrimerisieren Gemisches aus 4,4'-Diphenylmethandiisocyanat und 4,4'-Dicyclohexylmethandiisocyanat im Verhältnis 0,1 : 1 bis 1 : 0,1 mit einer Isocyanatfunktionalität von 2,2 bis 2,9
- 0,01 bis 1,5 Gew.-%, bezogen auf die Summe der sich aus den Hydroxyläquivalenten ergebenden Masse an Thioschwefelkatalysatoren, insbesondere des Typs der Dibutylzinnbis(thioglykolsäureester)
- nanoskalige aktive, reaktive oder inerte Füllstoffe wie aminogruppenhaltige Oligoharnstoffe, Polyharnstoffe, Melaminderivate und/oder Schichtsilikate des Montmorillonittyps oder Carbide wie Siliciumcarbid.

Die danach hergestellten Gele weisen eine Shore-00-Härte im Bereich von 30 bis 65 auf und können auch in situ unter den Bedingungen der Herstellung am Ort des Einsatzes erzeugt werden.

In einer weiteren Ausführungsform der Erfindung können den Gelen Öle zur Verringerung der Härte und zur Verbesserung der elektrischen Eigenschaften zugesetzt werden. Als Öle können danach native Öle, z. B. Leinöl, Rapsöl, Kokosöl, Sojaöl, Rübsenöl, Rapsöl, Traubenkernöl oder Kürbiskernöl, sowie deren Umsetzungs- und Stabilisierungsprodukte mit Viskositäten oberhalb 250 mPas (25°C) und mineralische Öle hoher Beständigkeit, in erster Linie Turbinen- oder Transformatorenöle, eingesetzt werden.

Als modifizierte native Öle werden solche Produkte bezeichnet, die durch irgendeine chemische Umsetzung mit einem nativen Öl erhalten werden. Dazu zählen Umesterungsprodukte, die z. B. durch eine Reaktion des nativen Öls mit einem Alkohol, einem Diol, einem Triol, mit einer Mono- oder Polycarbonsäure, einem Polyesteralkohol, einem Polyetheralkohol oder durch Hydratisierung mit Wasser in Gegenwart geeigneter Katalysatoren oder weiterer Reagenzien erhalten werden. Insbesondere werden damit Produkte bezeichnet, die durch Umesterung an den Estergruppen der Öle (Triglyceride) mittels Hydroxylgruppen enthaltender Verbindungen, z. B. Monoalkohole, Glykole oder Triole sowie von Oligomeren, z. B. Oligoesteralkoholen, Polyesteralkoholen, Oligoetheralkoholen, Polyetheralkoholen der Hydroxylfunktionalität 2 bis 5 oder Mono, Di- oder Tricarbonsäuren umgesetzt werden. Eine besondere Gruppe stellen die hydroxylierten nativen Öle dar, die z. B. durch eine Hydratisierung mit Wasser in Gegenwart von sauren Salzen oder durch Umsetzung mit Peroxiden oder Persäuren, vor allem Perameisensäure oder Peressigsäure, ggf. in Gegenwart von Katalysatoren erhalten werden.

Beispielhaft sei die Umsetzung von Sojaöl mit Ameisensäure und Wasserstoffperoxid genannt, durch die die Hydroxylfunktionalität des Sojaöls auf Werte von 2 bis 3,5 erhöht wird und das Reaktionsprodukt weiter alkoxyliert werden kann. Dadurch können Polyesteretheralkohole der Molmasse bis 6000 erhalten werden. Weiterhin kommt eine Umsetzung der nativen Öle, z. B. von Rapsöl, mit Oligoesterkondensaten, wie sie in der DE-OS 199 18 650 beschrieben sind, und die zu Reaktionsprodukten mit Hydroxylzahlen von 100 bis 400 mg KOH/g führen, in Frage.

Eine weitere Möglichkeit ist die Funktionalisierung der nativen Öle über eine Hydratisierung von Doppelbindungen durch Addition von Wasser. Diese Hydratisierung kann z. B. in Gegenwart von Kaliumhydrogensulfat oder -phosphat erfolgen. Durch die Addition von Wasser an die Doppelbindungen, z. B. bei Leinöl, Olivenöl oder Kokosöl, kann die Anzahl der verfügbaren Hydroxylgruppen und damit die Hydroxylfunktionalität auf Werte bis über 4 erhöht werden.

In einer weiteren Modifizierung können die nativen Öle mittels langkettiger Fettsäuren ohne Doppelbindungen, z. B. mit 24 C-Atomen, umgesetzt werden, wodurch wachsartige Produkte gebildet werden. Diese Umesterungen werden vorzugsweise in Gegenwart von Übergangsmetallacetaten oder -bromiden, z. B. Cobaltacetat, durchgeführt. Die frei werdende Carbonsäure wird entweder durch direkte Extraktion oder durch Bildung der Salze und anschließende Extraktion mit Wasser bzw. wässrigen Lösungen entfernt.

Die Polyesteralkohole werden auf der Basis sowohl aromatischer als auch aliphatischer Dicarbonsäuren in Gegenwart von Zusatzstoffen hergestellt. Die aromatisch-aliphatischen Polyesteralkohole bestehen aus
- mindestens einer aromatischen Dicarbonsäure mit 5 bis 45 %,
- mindestens einer aliphatischen Dicarbonsäure mit 3 bis 22 %,
- einem oder mehreren Diolen zwischen 30 und 72 % und
- einem oder mehreren Triolen zwischen 0,1 und 12 %,
wobei die aliphatischen und aromatischen Dicarbonsäuren über ein oder mehrere Diole statistisch in der Kette vereilt und das bzw. die Triol(e) nur über die primären Hydroxylgruppen statistisch in der Kette verteilt sind. Weiterhin weisen diese Polyesteralkohole eine Molmasse von Mₙ 250 bis 750 sowie eine rechnerische Funktionalität fₙ zwischen 2,00 und 2,8 auf, wobei die Hydroxylzahlen zwischen 180 bis 350 mg KOH/g liegen sollen.

Aromatische Dicarbonsäuren sind bevorzugt Terephthalsäure, Isophthalsäure oder Phthalsäure oder deren Gemische. Als aliphatische Dicarbonsäuren dienen bevorzugt Adipinsäure, Bernsteinsäure, Azelainsäure, Undecandisäure oder deren Gemische. Diole sind bevorzugt Diethylenglykol, Triethylenglykol, Tetraethylenglykol, höhere Polyethylenglykole oder Gemische davon. Triole sind bevorzugt Glycerin, 1,3,6-Hexantriol, 1,2,6-Hexantriol, 1,3,8-Octantriol oder Gemische davon.

Aus dem Anteil der aromatischen Dicarbonsäuren errechnet sich der Aromatenanteil. Zur Errechnung des Aromatenanteils wird der Aromat mit einer Molmasse von 76 angesetzt (C₆H₄). Bei den genannten aromatischen Dicarbonsäuren wäre das ein Aromatengehalt von 45,78 % (Aromatenmolmasse 76 geteilt durch Molmasse der Säure 166). Mit dieser Prozentzahl wird dann der Anteil der aromatischen Dicarbonsäure im Reaktionsgemisch multipliziert, wobei die entstehenden Reaktionsprodukte, die abdestilliert werden, mit einer Verringerung der o. g. Prozentzahl auf 42 % berücksichtigt werden. Damit ergibt sich für 5 % aromatische Dicarbonsäure ein Aromatengehalt von 2,1 % und bei 45 % aromatischer Dicarbonsäure ein Aromatengehalt von 18,9 %. Damit ist der hier beschriebene Bereich vollständig abgedeckt.

Die Erfindung wird anhand der folgenden Ausführungsbeispiele näher erläutert.

### Beispiel 1

Ein Polyurethangel wird hergestellt aus einem Gemisch aus 95,85 g eines Polyetheralkohols der Molmasse 3000 auf der Basis Glycerin und Propylenoxid, Hydroxylzahl 55,5 mg KOH/g, aus 39,15 g eines Polyetheralkohols der Molmasse 420 auf der Basis Glycerin und Propylenoxid, Hydroxylzahl 402 mg KOH/g, 0,48 g N-Methyl-dicyclohexylamin, die zunächst 30 Minuten bei 25°C vorgemischt werden, sowie einem teiltrimerisierten Isocyanat, das aus 116,7 g 4,4'-Dicyclohexylmethyldiisocyanat und 8,7 g 2,4-Toluylendiisocyanat in Gegenwart von 0,175 g Tris-1,3,5-(diethylaminopropyl)hexahydro-s-triazin hergestellt wurde, durch Vermischen mittels einer 2-Komponenten-Niederdruckmaschine und Vergießen in Formen hergestellt. Das erhaltene Polyurethangel weist eine Shore-A-Härte von 76 auf, hat eine Durchschlagspannung von 65 kV/mm sowie eine sehr gute Haftung zwischen den Oberflächen.

### Beispiel 2

Ein Polyurethangel wird hergestellt aus einem Gemisch aus 95,85 g eines Polyetheralkohols der Molmasse 3000 auf der Basis Glycerin und Propylenoxid, Hydroxylzahl 55,5 mg KOH/g, aus 39,15 g eines Polyetheralkohols der Molmasse 420 auf der Basis Glycerin und Propylenoxid, Hydroxylzahl 402 mg KOH/g, 0,48 g N-Methyl-dicyclohexylamin, 2,7 g nanoskaligen Montmorillonits, die zunächst 30 Minuten bei 25°C vorgemischt werden, sowie einem teiltrimerisierten Isocyanat, das aus 116,7 g 4,4'-Dicyclohexylmethyldiisocyanat und 8,7 g 2,4-Toluylendiisocyanat in Gegenwart von 0,175 g Tris-1,3,5-(diethylaminopropyl)hexahydro-s-triazin hergestellt wurde, durch Vermischen mittels einer 2-Komponenten-Niederdruck-maschine und Vergießen in Formen hergestellt. Das erhaltene Polyurethangel weist eine Shore-A-Härte von 77 auf, hat eine Durchschlagspannung von 72 kV/mm sowie eine sehr gute Haftung zwischen den Oberflächen.

### Beispiel 3

### a) Herstellung einer Oligoharnstoffdispersion in einem Polyetheralkohol

Ein Gemisch aus 255 g Dipropylenglykol und 45 g Di-n-butylamin wird in einem 1,5 I-Vierhalskolben auf 160°C unter Rühren und Beschleiern mit Stickstoff erwärmt. Nach Erreichen der Temperatur werden innerhalb von 55 Minuten 700 g Flocken eines Polyurethan-Blockweichschaumstoffs hinzugefügt. Dabei wird die Temperatur langsam auf 210°C erhöht. Nach Abschluss der Zugabe wird noch 30 Minuten bei 210°C gerührt. Anschließend wird das Reaktionsprodukt in einen Vakuumrotationsverdampfer überführt und bei 130°C/1 mm der größte Teil des Dipropylenglykols und überschüssige Leichtsieder abdestilliert. Man erhält nach dem Abkühlen 835 g eines Dispersionspolyols der Hydroxylzahl 76,7 mg KOH/g mit einer Teilchengröße der Oligoharnstoffteilchen von 5 µm bis 130 µm.

### b) Herstellung des erfindungsgemäßen Polyurethangels

Aus einem Gemisch von 75,85 g des Polyetheralkohols mit dispergierten Oligoharnstoffteilchen, 39,15 g eines Polyetheralkohols der Molmasse 420 auf der Basis Glycerin und Propylenoxid, Hydroxylzahl 402 mg KOH/g, 0,3 g N-Methyl-dicyclohexylamin und 2,05 g nanoskaligen Montmorillonits, die zunächst 30 Minuten bei 25°C vorgemischt werden, sowie einem teiltrimerisierten Isocyanat, das aus 94,5 g 4,4'-Dicyclohexylmethyldiisocyanat und 7,3 g 2,4-Toluylendiisocyanat in Gegenwart von 0,165 g Tris-1,3,5-(diethylaminopropyl)hexahydro-s-triazin hergestellt wurde, durch Vermischen mittels einer 2-Komponenten-Niederdruckmaschine und Vergießen in Formen wird das erfindungsgemäße Polyurethangel hergestellt. Das erhaltene Polyurethangel weist eine Shore-A-Härte von 50 auf, hat eine Durchschlagsfestigkeit von 620 kV/mm sowie eine sehr gute Haftung zwischen den Oberflächen.

### Beispiel 4

Ein Polyurethangel wird hergestellt aus einem Gemisch aus 95,85 g eines Polyetheralkohols der Molmasse 3000 auf der Basis Glycerin und Propylenoxid, Hydroxylzahl 55,5 mg KOH/g, aus 39,15 g eines Polyetheralkohols der Molmasse 420 auf der Basis Glycerin und Propylenoxid, Hydroxylzahl 402 mg KOH/g, 0,48 g N-Methyl-dicyclohexylamin 7,2 g mikronisiertem Melamincyanurat und 1,97 g Schichtsilikat, die zunächst 30 Minuten bei 25°C vorgemischt werden, sowie einem teiltrimerisierten Isocyanat, das aus 116,7 g 4,4'-Dicyclohexylmethyldiisocyanat und 8,7 g 2,4-Toluylendiisocyanat in Gegenwart von 0,175 g Tris-1,3,5-(diethylaminopropyl)hexahydro-s-triazin hergestellt wurde, durch Vermischen mittels einer 2-Komponenten-Niederdruckmaschine und Vergießen in Formen hergestellt. Das erhaltene Polyurethangel weist eine Shore-A-Härte von 55 auf, hat eine Durchschlagsfestigkeit von 54 kV/mm sowie eine sehr gute Haftung zwischen den Oberflächen. Sein Brandverhalten wurde über den Sauerstoffindex (LOI-Methode) bestimmt und betrug 25,3.

### Beispiel 5

Ein Polyurethangel wird hergestellt aus einem Gemisch aus 95,85 g eines Polyetheralkohols der Molmasse 3000 auf der Basis Glycerin und Propylenoxid, Hydroxylzahl 55,5 mg KOH/g, aus 39,15 g eines Polyetheralkohols der Molmasse 420 auf der Basis Glycerin und Propylenoxid, Hydroxylzahl 402 mg KOH/g, 0,48 g N-Methyl-dicyclohexylamin, 4,5 g Molybdändisulfid und 1,5 g Schichtsilikat, die zunächst 30 Minuten bei 25°C vorgemischt werden, sowie einem teiltrimerisierten Isocyanat, das aus 116,7 g 4,4'-Dicyclohexylmethyldiisocyanat und 8,7 g 2,4-Toluylendiisocyanat in Gegenwart von 0,175 g Tris-1,3,5-(diethylaminopropyl)hexa-hydro-s-triazin hergestellt wurde, durch Vermischen mittels einer 2-Komponenten-Niederdruckmaschine und Vergießen in Formen hergestellt. Das erhaltene Polyurethangel weist eine Shore-A-Härte von 60 auf, hat eine Durchschlagsfestigkeit von 98 kV/mm, eine Oberflächenleitfähigkeit von 310 mS/cm und einen spezifischen Widerstand von 800 Ω/cm.

### Beispiel 6

Ein Polyurethangel wird hergestellt aus einem Gemisch aus 95,85 g eines Polyetheralkohols der Molmasse 3000 auf der Basis Glycerin und Propylenoxid, Hydroxylzahl 55,5 mg KOH/g, aus 39,15 g eines Polyetheralkohols der Molmasse 420 auf der Basis Glycerin und Propylenoxid, Hydroxylzahl 402 mg KOH/g, 0,48 g N-Methyl-dicyclohexylamin, 6,65 g mikronisiertem Siliziumcarbid und 2,15 g Schichtsilikat, die zunächst 30 Minuten bei 25°C vorgemischt werden, sowie einem teiltrimerisierten Isocyanat, das aus 116,7 g 4,4'-Dicyclohexylmethyldiisocyanat und 8,7 g 2,4-Toluylendiisocyanat in Gegenwart von 0,175 g Tris-1,3,5-(diethylaminopropyl)hexahydro-s-triazin hergestellt wurde, durch Vermischen mittels einer 2-Komponen-tenNiederdruckmaschine und Vergießen in Formen hergestellt. Das erhaltene Polyurethangel weist eine Shore-A-Härte von 65 auf, hat eine Durchschlagsfestigkeit von 130 kV/mm sowie eine Wärmeleitfähigkeit von 3,67 W/Km².

### Beispiel 7

Ein Polyurethangel wird hergestellt aus einem Gemisch aus 95,85 g eines Polyetheralkohols der Molmasse 3000 auf der Basis Glycerin und Propylenoxid, Hydroxylzahl 55,5 mg KOH/g, aus 25,5 g eines Polyetheralkohols der Molmasse 420 auf der Basis Glycerin und Propylenoxid, Hydroxylzahl 402 mg KOH/g, 16,5 g eines aromatischen Polyesteralkohols auf der Basis von Terephthalsäure, 2-Ethyl-1,3-hexandiol und Glycerin mit einer Hydroxylzahl von 319 mg KOH/g und einer Hydroxylfunktionalität von 2,14, 0,55 g N-Methyl-dicyclohexylamin, die zunächst 30 Minuten bei 25°C vorgemischt werden, sowie einem teiltrimerisierten Isocyanat, das aus 116,7 g 4,4'-Dicyclohexylmethyl-diisocyanat und 8,7 g 2,4-Toluylendiisocyanat in Gegenwart von 0,175 g Tris-1,3,5-(diethyl-aminopropyl)hexahydro-s-triazin hergestellt wurde, durch Vermischen mittels einer 2-Komponenten-Niederdruckmaschine und Vergießen in Formen hergestellt. Das erhaltene Polyurethangel weist eine Shore-A-Härte von 80 auf und hat eine sehr gute Haftung zu einer Polystyrol-Oberfläche, so dass die Verbindung zwischen beiden nur unter Zerstörung eines Werkstoffs möglich ist.

### Beispiel 8

### a) Herstellung einer nanoskaligen Oligohamstoffdispersion in einem Polyetheralkohol

Ein Gemisch aus 255 g Dipropylenglykol und 45 g Di-n-butylamin wird in einem 1,5 I-Vierhalskolben auf 160°C unter Rühren und Beschleiern mit Stickstoff erwärmt. Nach Erreichen der Temperatur werden innerhalb von 55 Minuten 700 g Flocken eines Polyurethan-Blockweichschaumstoffs und simultan 78 g eines propylenoxidbasierten Polyetheralkohols der Hydroxylzahl 55,5 mg KOH/g hinzugefügt. Dabei wird die Temperatur langsam auf 210°C erhöht. Nach Abschluss der Zugabe wird noch 30 Minuten bei 210°C gerührt. Anschließend wird das Reaktionsprodukt in einen Vakuumrotationsverdampfer überführt und bei 120°C/1 mm der größte Teil des Dipropylenglykols und überschüssige Leichtsieder abdestilliert. Man erhält nach dem Abkühlen 896 g eines Dispersionspolyols der Hydroxylzahl 73,2 mg KOH/g mit einer Teilchengröße der Oligoharnstoffteilchen von 110 bis 850 nm.

### b) Herstellung des erfindungsgemäßen Polyurethangels

Aus einem Gemisch von 78,0 g des Polyetheralkohols mit dispergierten Oligoharnstoffnanoteilchen, 39,15 g eines Polyetheralkohols der Molmasse 420 auf der Basis Glycerin und Propylenoxid, Hydroxylzahl 402 mg KOH/g, 0,3 g N-Methyl-dicyclohexylamin und 2,05 g nanoskaligen Montmorillonits, die zunächst 30 Minuten bei 25°C vorgemischt werden, sowie einem teiltrimerisierten Isocyanat, das aus 94,5 g 4,4'-Dicyclohexylmethyldiisocyanat und 7,3 g 2,4-Toluylendiisocyanat in Gegenwart von 0,165 g Tris-1,3,5-(diethylaminopropyl)hexa-hydro-striazin hergestellt wurde, durch Vermischen mittels einer 2-Komponenten-Niederdruckmaschine und Vergießen in Formen wird das erfindungsgemäße Polyurethangel hergestellt. Das erhaltene Polyurethangel weist eine Shore-A-Härte von 45 auf, hat eine Durchschlagsfestigkeit von 122 kV/mm sowie eine sehr gute Haftung zwischen den Oberflächen.

### Beispiel 9

Ein Polyurethangel wird hergestellt aus einem Gemisch aus 95,85 g eines Polyetheralkohols der Molmasse 3000 auf der Basis Glycerin und Propylenoxid, Hydroxylzahl 55,5 mg KOH/g, aus 25,5 g eines Polyetheralkohols der Molmasse 420 auf der Basis Glycerin und Propylenoxid, Hydroxylzahl 402 mg KOH/g, 16,5 g eines aromatischen Polyesteralkohols auf der Basis von Terephthalsäure, 2-Ethyl-1,3-hexandiol und Glycerin mit einer Hydroxylzahl von 319 mg KOH/g und einer Hydroxylfunktionalität von 2,14, 0,55 g N-Methyl-dicyclohexylamin und 16,2 g eines hochviskosen Transformatorenöls (Viskosität bei 25°C 980 mPas), die zunächst 30 Minuten bei 25°C vorgemischt werden, sowie einem teiltrimerisierten Isocyanat, das aus 105 g 4,4'-Dicyclohexylmethyldiisocyanat und 9 g 2,4-Toluylendiisocyanat in Gegenwart von 0,18 g Tris-1,3,5-(diethylaminopropyl)hexahydro-s-triazin hergestellt wurde, durch Vermischen mittels einer 2-Komponenten-Niederdruckmaschine und Vergießen in Formen hergestellt. Das erhaltene Polyurethangel weist eine Shore-A-Härte von 63, Weiterreissfestigkeit > 30 N/mm, sowie eine Durchschlagspannung von 116 kV/mm auf und hat einen spezifischen Widerstand von 8*10¹⁴ Q x cm. Die Haftfestigkeit zweier Gelschichten ist so, dass die Verbindung zwischen beiden nur unter Zerstörung eines der Gele möglich ist. Die Lichtbogenbeständigkeit beträgt 280 s, die Dielektrizitätskonstante beträgt 3,4εᵣ und einem Verlustfaktor von < 0,0035 tan δ.

### Beispiel 10

Ein Polyurethangel wird hergestellt aus einem Gemisch aus 95,85 g eines Polyetheralkohols der Molmasse 3000 auf der Basis Glycerin und Propylenoxid, Hydroxylzahl 55,5 mg KOH/g, aus 25,5 g eines Polyetheralkohols der Molmasse 420 auf der Basis Glycerin und Propylenoxid, Hydroxylzahl 402 mg KOH/g, 15 g eines epoxidierten Sojaöls mit einer Epoxydzahl von 63 mg KOH/g, 0,55 g N-Methyl-dicyclohexylamin, die zunächst 30 Minuten bei 25°C vorgemischt werden, sowie einem teiltrimerisierten Isocyanat, das aus 75 g 4,4'-Dicyclohexylmethyldiisocyanat und 7,2 g 2,4-Toluylendiisocyanat in Gegenwart von 0,14 g Tris-1,3,5-(diethylaminopropyl)hexahydro-s-triazin hergestellt wurde, durch Vermischen mittels einer 2-Komponenten-Niederdruckmaschine und Vergießen in Formen hergestellt. Das erhaltene Polyurethangel weist eine Shore-A-Härte von 51 auf. Das erfindungsgemäße Polyurethangel ist nach der Herstellung ein kompakter Block, der sich jedoch bei mechanischer Belastung verformt und bei hinreichender äußerer Kraft flüssig wird. Das Gel hat thixotrope Eigenschaften und wird zum Schmieren von schnell bewegten Maschinenteilen an Stellen eingesetzt, die mit flüssigen Schmiermitteln schnell trocken laufen würden.

## Patentansprüche

1. Polyurethangele herstellbar durch Umsetzung eines Polyurethansystems umfassend
(A1) ein oder mehrere, überwiegend aus auf ein Startermolekül der Hydroxylfunktionalität zwischen 2 und 4 addierten Propylenoxid hergestellten Polyetheralkohole der Hydroxylzahl 28 bis 90 mg KOH/g,
(A2) ein oder mehrere, überwiegend aus auf ein Startermolekül der Hydroxylfunktionalität zwischen 2 und 4 addierten Propylenoxid hergestellten Polyetheralkohole der Hydroxylzahl 240 bis 850 mg KOH/g,
(B1) ein oder mehrere Diisocyanate,
(B2) ein oder mehrere Triisocyanate, die vorzugsweise durch Trimerisierung von Diisocyanaten hergestellt wurden,
(A3) mindestens einen Zusatzstoff, der eine vorgegebene Funktion erfüllt und
(A4) mindestens einen Zusatzstoff mit einer Teilchengröße im Bereich von 1 bis 650 nm
in Gegenwart von einem oder mehreren Katalysatoren (A5) für die Polyurethanbildung.

2. Polyurethangele nach Anspruch 1,
**dadurch gekennzeichnet, dass**
als Polyetheralkohol (A1)
- ein auf einen 2- bis 4-funktionellen Starter ausschließlich mit Propylenoxid aufgepfropfter Polyetheralkohol mit einer Hydroxylzahl zwischen 44 und 90 mg KOH/g vorliegt,
- ein oligoharnstoffhaltiger langkettiger Polyetheralkohol, in dem die Oligoharnstoffe durch Depolymerisation von Polyurethan-Blockweichschaumstoffen durch Solvolyse mit einem Gemisch aus mindestens einem Glykol und mindestens einem sekundären aliphatischen Amin erzeugt werden, in einer Menge von 0,1 bis 25 Gew.-% vorliegt und einen Teilchendurchmesser von 1 bis 1000 µm aufweist oder
- ein oligoharnstoffhaltiger langkettiger Polyetheralkohol, in dem die Oligoharnstoffe durch Depolymerisation von Polyurethan-Blockweichschaumstoffen durch Solvolyse mit einem Gemisch aus mindestens zwei Glykolen und mindestens einem sekundären aliphatischen Amin erzeugt werden, in einer Menge von 0,1 bis 15 Gew.-% vorliegt und einen Teilchendurchmesser von 1 bis 1000 nm aufweist.

3. Polyurethangele nach Anspruch 1,
**dadurch gekennzeichnet, dass**
der Polyetheralkohol (A2)
- ein auf einen 2- bis 4-funktionellen Starter ausschließlich mit Propylenoxid aufgepfropfter Polyetheralkohol mit einer Hydroxylzahl zwischen 350 und 850 mg KOH/g ist oder
- ein auf einen 2- bis 4-funktionellen Starter ausschließlich mit Propylenoxid aufgepfropfter Polyetheralkohol und mit einer aliphatischen Dicarbonsäure im Unterschuss umgesetzter Polyetherester mit einer Hydroxylzahl zwischen 340 und 420 mg KOH/g ist.

4. Polyurethangele nach Anspruch 1,
**dadurch gekennzeichnet, dass**
als Triisocyanat (B2) ein teiltrimerisiertes Gemisch von aliphatischen, aralphatischen und/oder cycloaliphatischen, und mindestens einem aromatischen Diisocyanat vorliegt, wobei das aromatische Diisocyanat (B2) vorzugsweise mit 1 bis 15 Gew.-% im Gemisch vorliegt.

5. Polyurethangele nach Anspruch 1,
**dadurch gekennzeichnet, dass**
als Katalysatoren (A5) Bis-(dimethylaminoethyl)ether, Pentamethyldiethylentriamin, Dimorpholinodiethylether, Tris-(3-dimethylamino)propylamin, Pentamethylpropylentriamin, N-Methyldi-cyclohexylamin, N-Methylmorpholin, N,N'-Dimethylpiperazin und/oder 1-Dimethylaminoethyl-4-methyl-piperazin vorliegen.

6. Polyurethangele nach einem der Ansprüche 1 bis 5,
**dadurch gekennzeichnet, dass**
das Polyurethansystem
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
(A5.1) 0,001 bis 0,5 Teile eines oder mehrerer Katalysatoren für die Polyurethanbildung
enthält und weiterhin entweder
(A3.1) 0,1 bis 15 Teile eines die Wärmeleitfähigkeit verbessernden Stoffes in mikronisierter Form, vorzugsweise Siliziumcarbid oder Graphit mit Teilchendurchmessern zwischen 0,1 und 500 µm, und
(A4.1) 0,01 bis 5 Teile eines nanoskaligen Schichtsilikats mit einer Teilchengröße im Bereich von 50 bis 650 nm;
oder
(A3.2) 0,1 bis 15 Teile eines die elektrische Leitfähigkeit verbessernden Stoffes in mikronisierter Form, vorzugsweise jodbehandelter Kohlenstoff, Graphit oder Molybdänsulfid mit Teilchendurchmessern zwischen 0,1 und 500 µm, und
(A4.1) 0,01 bis 5 Teilen eines nanoskaligen Schichtsilikats mit einer Teilchengröße im Bereich von 50 bis 650 nm;
oder
(A3.3) 1 bis 15 Teile eines flüssigen, pastösen oder gelartigen höhermolekularen Kohlenwasserstoffs mit hoher elektrischer Isolationsfähigkeit, vorzugsweise ein Mineralöl oder Vaseline, und
(A4.1) 0,01 bis 5 Teile eines nanoskaligen Schichtsilikats mit einer Teilchengröße im Bereich von 50 bis 650 nm;
oder
(A3.4) 2,5 bis 15 Teile eines die Flammfestigkeit verbessernden Stoffes in mikronisierter Form, vorzugsweise Melamin, Melamincyanurat, Melamin-Formaldehyd-Harz, Harnstoff-Formaldehydharz und/oder Polycyanuratharz mit Teilchendurchmessern zwischen 0,1 und 500 µm, und
(A4.1) 0,01 bis 5 Teilen eines nanoskaligen Schichtsilikats mit einer Teilchengröße im Bereich von 50 bis 650 nm;
oder
(A3.5) 0,1 bis 5 Teile eines modifizierten nativen Öls und
(A4.1) 0,01 bis 5 Teile eines nanoskaligen Schichtsilikats mit einer Teilchengröße im Bereich von 50 bis 650 nm.

7. Polyurethangele nach einem der Ansprüche 1 bis 5,
**dadurch gekennzeichnet, dass**
das Polyurethansystem
(A1.2) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g mit zwischen 2 und 15 Gew.-% dispergierten Oligoharnstoffen der Teilchengröße 10 bis 1000 µm,
(A2.2) 25 bis 10 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(B1.1) 25 bis 42 Teilen eines oder mehrerer Diisocyanate,
(B2.1) 5 bis 15 Teile eines vorzugsweise durch Trimerisierung von Diisocyanaten hergestellten Triisocyanats,
(A5.1) 0,001 bis 0,5 Teilen eines oder mehrerer Katalysatoren für die Polyurethanbildung
enthält und weiterhin entweder
(A3.5) 0,1 bis 5 Teilen eines modifizierten nativen Öls und
(A4.1) 0,01 bis 5 Teilen eines nanoskaligen Schichtsilikats mit einer Teilchengröße im Bereich von 50 bis 650 nm;
oder
(A4.1) 0,01 bis 5 Teile eines nanoskaligen Schichtsilikats mit einer Teilchengröße im Bereich von 50 bis 650 nm.

8. Verfahren zur Herstellung von Polyurethangelen gemäß
Anspruch 1,
**dadurch gekennzeichnet, dass**
(A1) ein Polyetheralkohol aus einem oder mehreren, überwiegend aus auf ein Startermolekül der Hydroxylfunktionalität zwischen 2 und 4 addierten Propylenoxid der Hydroxylzahl 28 bis 90 mg KOH/g,
(A2) ein Polyetheralkohol aus einem oder mehreren, überwiegend aus auf ein Startermolekül der Hydroxylfunktionalität zwischen 2 und 4 addierten Propylenoxid der Hydroxylzahl 240 bis 850 mg KOH/g,
(A5) ein oder mehrere Katalysatoren für die Polyurethanbildung,
(A3) mindestens ein Zusatzstoff, der eine vorgegebene Funktion erfüllt und
(A4) mindestens ein Zusatzstoff mit einer Teilchengröße im Bereich von 1 bis 650 nm
innig miteinander vermischt werden und anschließend mit
(B1) einem oder mehreren Diisocyanaten,
(B2) einem oder mehreren Triisocyanaten, die vorzugsweise durch Trimerisierung von Diisocyanaten hergestellt wurden,
im molaren Verhältnis von 1 : 0,5 bis 1 : 1,2 vermischt und zu einem Polyurethangel mit einer Shore-A-Härte zwischen 35 und 85 umgesetzt werden.

9. Verfahren nach Anspruch 8,
**dadurch gekennzeichnet, dass**
als Polyetheralkohol (A1) ein oligoharnstoffhaltiger langkettiger Polyetheralkohol eingesetzt wird, in dem die Oligoharnstoffe durch Depolymerisation von Polyurethan-Blockweichschaumstoffen durch Solvolyse mit einem Gemisch aus mindestens zwei Glykolen und mindestens einem sekundären aliphatischen Amin erzeugt werden, in einer Menge von 0,1 bis 25 Gew.-% vorliegen und einen Teilchendurchmesser von 1 bis 1000 µm aufweisen.

10. Verfahren nach Anspruch 8 oder 9,
**dadurch gekennzeichnet, dass**
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A3.1) 0,1 bis 15 Teile eines die Wärmeleitfähigkeit verbessernden Stoffes in mikronisierter Form, vorzugsweise Siliziumcarbid, Graphit oder Molybdänsulfid mit Teilchendurchmessern zwischen 0,1 und 500 µm, und
(A4.1) 0,01 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
zugesetzt, dieses Gemisch wiederum innig vermischt, einer Formgebung unterworfen und unter Formgebung gehärtet wird.

11. Verfahren nach Anspruch 8 oder 9,
**dadurch gekennzeichnet, dass**
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A3.2) 0,1 bis 15 Teile eines die elektrische Leitfähigkeit verbessernden Stoffes in mikronisierter Form, vorzugsweise jodbehandelter Kohlenstoff, Graphit oder Molybdänsulfid mit Teilchendurchmessern zwischen 0,1 und 500 µm, und
(A4.1) 0,01 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
zugesetzt, dieses Gemisch wiederum innig vermischt, einer Formgebung unterworfen und unter Formgebung gehärtet wird.

12. Verfahren nach Anspruch 8 oder 9,
**dadurch gekennzeichnet, dass**
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A3.3) 2,5 bis 15 Teile eines die Flammfestigkeit verbessernden Stoffes in mikronisierter Form, vorzugsweise Melamin, Melamincyanurat, Melamin-Formaldehyd-Harz, Harnstoff-Formaldehydharz und/oder Polycyanuratharz mit Teilchendurchmessern zwischen 0,1 und 500 µm, und
(A4.1) 0,1 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanaten,
(B2.1) 5 bis 15 Teile eines vorzugsweise durch Trimerisierung von Diisocyanaten hergestellten Triisocyanats,
zugesetzt, dieses Gemisch wiederum innig vermischt, einer Formgebung unterworfen und unter Formgebung gehärtet wird.

13. Verfahren nach Anspruch 8 oder 9,
**dadurch gekennzeichnet, dass**
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A6) 3 bis 18 Teile eines aliphatisch-aromatischen Polyesteralkohols der Hydroxylzahl 180 bis 320 mg KOH/g mit 2 bis 23 Gew.-5 Aromatenanteil und
(A4.1) 0,1 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanate,
(B2.1) 5 bis 15 Teile eines vorzugsweise durch Trimerisierung von Diisocyanaten hergestellten Triisocyanats
zugesetzt, dieses Gemisch wiederum innig vermischt, einer Formgebung unterworfen und unter Formgebung gehärtet wird.

14. Verfahren nach Anspruch 8 oder 9,
**dadurch gekennzeichnet, dass**
(A1.1) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g,
(A2.1) 30 bis 15 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung,
(A3.5) 0,1 bis 5 Teile eines modifizierten nativen Öls und
(A4.1) 0,01 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanate,
(B2.1) 5 bis 15 Teile eines vorzugsweise durch Trimerisierung von Diisocyanaten hergestellten Triisocyanats
zugesetzt, dieses Gemisch wiederum innig vermischt, einer Formgebung unterworfen und unter Formgebung gehärtet wird.

15. Verfahren nach Anspruch 8 oder 9,
**dadurch gekennzeichnet, dass**
(A1.2) 40 bis 60 Teile eines überwiegend aus auf ein Startermolekül der Hydroxylfunktionalität zwischen 2 und 4 addierten Propylenoxid hergestellten Polyetheralkohols der Hydroxylzahl 44 bis 90 mg KOH/g mit zwischen 2 und 15 Gew.-% dispergierten Oligoharnstoffen der Teilchengröße 10 bis 1000 nm,
(A2.2) 25 bis 10 Teile eines überwiegend aus auf ein Startermolekül der Hydroxylfunktionalität zwischen 2 und 4 addierten Propylenoxid hergestellten Polyetheralkohols der Hydroxylzahl 320 bis 450 mg KOH/g,
(A5.1) 0,001 bis 0,5 Teile eines oder mehrerer Katalysatoren für die Polyurethanbildung
(A4.1) 0,01 bis 5 Teile eines nanoskaligen Schichtsilikats mit einer Teilchengröße im Bereich von 50 bis 650 nm
innig miteinander vermischt werden und zu diesem Gemisch
(B1.1) 25 bis 42 Teile eines oder mehrerer Diisocyanate,
(B2.1) 5 bis 15 Teile eines vorzugsweise durch Trimerisierung von Diisocyanaten hergestellten Triisocyanats
zugesetzt, dieses Gemisch wiederum innig vermischt, einer Formgebung unterworfen und unter Formgebung gehärtet wird.

## Claims

1. A polyurethane gel producible by conversion of a polyurethane system comprising
(A1)one or more polyether alcohols which have been prepared predominantly from propylene oxide added onto a starter molecule of hydroxyl functionality from 2 to 4 and have a hydroxyl number of 28 to 90 mg KOH/g,
(A2)one or more polyether alcohols which have been prepared predominantly from propylene oxide added onto a starter molecule of hydroxyl functionality from 2 to 4 and have a hydroxyl number of 240 to 850 mg KOH/g,
(B1)one or more diisocyanates,
(B2)one or more triisocyanates which have preferably been prepared by trimerization of diisocyanates,
(A3)at least one additive which fulfills a given function and
(A4)at least one additive having a particle size in the range from 1 to 650 nm
in the presence of one or more catalysts (A5) for polyurethane formation.

2. The polyurethane gel as claimed in claim 1,
**characterized in that** the polyether alcohol (A1) present
- is a polyether alcohol which has been grafted onto a di- to tetrafunctional starter exclusively with propylene oxide and has a hydroxyl number in the range of 44 to 90 mg KOH/g,
- is an oligourea-containing long-chain polyether alcohol in which the oligoureas are obtained by depolymerization of flexible polyurethane slabstock foams by solvolysis with a mixture of at least one glycol and at least one secondary aliphatic amine, in an amount of 0.1 to 25% by weight, and has a particle diameter of 1 to 1000 µm or
- is an oligourea-containing long-chain polyether alcohol in which the oligoureas are obtained by depolymerization of flexible polyurethane slabstock foams by solvolysis with a mixture of at least two glycols and at least one secondary aliphatic amine, in an amount of 0.1 to 15% by weight, and has a partile diameter of 1 to 1000 nm.

3. The polyurethane gel as claimed in claim 1,
**characterized in that** the polyether alcohol (A2) present
- is a polyether alcohol which has been grafted onto a di- to tetrafunctional starter exclusively with propylene oxide and has a hydroxyl number in the range of 350 to 850 mg KOH/g or
- is a polyether alcohol which has been grafted onto a di- to tetrafunctional starter exclusively with propylene oxide and polyether ester which has been reacted with an aliphatic dicarboxylic acid in deficiency, and has a hydroxyl number in the range of 340 to 420 mg KOH/g.

4. The polyurethane gel as claimed in claim 1,
**characterized in that**
the triisocyanate (B2) present is a partly trimerized mixture of aliphatic, araliphatic and/or cycloaliphatic, and at least one aromatic, diisocyanate, wherein the aromatic diisocyanate (B2) is preferably present in the mixture at 1 to 15% by weight.

5. The polyurethane gel as claimed in claim 1,
**characterized in that**
the catalysts (A5) present are bis(dimethylaminoethyl) ether, pentamethyldiethylene-triamine, dimorpholinodiethyl ether, tris(3-dimethylamino)propylamine, pentamethyl-propylenetriamine, N-methyldicyclohexylamine, N-methylmorpholine, N,N'-dimethylpiperazine and/or 1-dimethylaminoethyl-4-methylpiperazine.

6. The polyurethane gel as claimed in any of claims 1 to 5,
**characterized in that**
the polyurethane system comprises
(A1.1) 40 to 60 parts of a polyether alcohol which has been prepared predominantly from propylene oxide added onto a starter molecule of hydroxyl functionality from 2 to 4 and has a hydroxyl number of 44 to 90 mg KOH/g,
(A2.1) 30 to 15 parts of a polyether alcohol which has been prepared predominantly from propylene oxide added onto a starter molecule of hydroxyl functionality from 2 to 4 and has a hydroxyl number of 320 to 450 mg KOH/g,
(B1.1) 25 to 42 parts of one or more diisocyanates,
(B2.1) 5 to 15 parts of a triisocyanate prepared preferably by trimerization of diisocyanates,
(A5.1) 0.001 to 0.5 part of one or more catalysts for polyurethane formation,
and additionally comprises either
(A3.1) 0.1 to 15 parts of a substance which improves thermal conductivity in micronized form, preferably silicon carbide or graphite having particle diameters in the range from 0.1 to 500 µm, and
(A4.1) 0.01 to 5 parts of a nanoscale sheet silicate having a particle size in the range from 50 to 650 nm
or
(A3.2) 0.1 to 15 parts of a substance which improves electrical conductivity in micronized form, preferably iodine-treated carbon, graphite or molybdenum sulfide having particle diameters in the range from 0.1 to 500 µm, and
(A4.1) 0.01 to 5 parts of a nanoscale sheet silicate having a particle size in the range from 50 to 650 nm
or
(A3.3) 1 to 15 parts of a liquid, pasty or gel-type, relatively high molecular weight hydrocarbon with high electrical insulation capacity, preferably a mineral oil or Vaseline, and
(A4.1) 0.01 to 5 parts of a nanoscale sheet silicate having a particle size in the range from 50 to 650 nm
or
(A3.4) 2.5 to 15 parts of a substance which improves flame retardancy in micronized form, preferably melamine, melamine cyanurate, melamine-formaldehyde resin, urea-formaldehyde resin and/or polycyanurate resin having particle diameters in the range from 0.1 to 500 µm, and
(A4.1) 0.01 to 5 parts of a nanoscale sheet silicate having a particle size in the range from 50 to 650 nm
or
(A3.5) 0.1 to 5 parts of a modified native oil and
(A4.1) 0.01 to 5 parts of a nanoscale sheet silicate having a particle size in the range from 50 to 650 nm.

7. The polyurethane gel as claimed in any of claims 1 to 5,
**characterized in that**
the polyurethane system comprises
(A1.2) 40 to 60 parts of a polyether alcohol which has been prepared predominantly from propylene oxide added onto a starter molecule of hydroxyl functionality from 2 to 4 and has a hydroxyl number of 44 to 90 mg KOH/g with in the range from 2 to 15% by weight of dispersed oligoureas of particle size 10 to 1000 µm,
(A2.2) 25 to 10 parts of a polyether alcohol which has been prepared predominantly from propylene oxide added onto a starter molecule of hydroxyl functionality from 2 to 4 and has a hydroxyl number of 320 to 450 mg KOH/g,
(B1.1) 25 to 42 parts of one or more diisocyanates,
(B2.1) 5 to 15 parts of a triisocyanate prepared preferably by trimerization of diisocyanates,
(A5.1) 0.001 to 0.5 part of one or more catalysts for polyurethane formation,
and additionally comprises either
(A3.5) 0.1 to 5 parts of a modified native oil and
(A4.1) 0.01 to 5 parts of a nanoscale sheet silicate having a particle size in the range from 50 to 650 nm
or
(A4.1) 0.01 to 5 parts of a nanoscale sheet silicate having a particle size in the range from 50 to 650 nm.

8. A process for producing polyurethane gels as claimed in claim 1, **characterized in that**
(A1)a polyether alcohol of hydroxyl number 28 to 90 mg KOH/g composed of one or more, predominantly from onto a starter molecule of hydroxyl functionality from 2 to 4 added propylene oxide,
(A2)a polyether alcohol of hydroxyl number 240 to 850 mg KOH/g composed of one or more, predominantly from onto a starter molecule of hydroxyl functionality from 2 to 4 added propylene oxide,
(A5) one or more catalysts for polyurethane formation,
(A3) at least one additive which fulfills a given function and
(A4)at least one additive having a particle size in the range from 1 to 650 nm
are mixed intimately, with one another and then mixed with
(B1)one or more diisocyanates,
(B2)one or more triisocyanates which have preferably been prepared by trimerization of diisocyanates,
in a molar ratio of 1:0.5 to 1:1.2, and converted to a polyurethane gel having a Shore A hardness in the range from 35 to 85.

9. The process as claimed in claim 8,
**characterized in that**
the polyether alcohol (A1) used is an oligourea-containing long-chain polyether alcohol in which the oligoureas are obtained by depolymerization of flexible polyurethane slabstock foams by solvolysis with a mixture of at least two glycols and at least one secondary aliphatic amine, are present in an amount of 0.1 to 25% by weight, and have a particle diameter of 1 to 1000 µm.

10. The process as claimed in claim 8 or 9,
**characterized in that**
(A1.1) 40 to 60 parts of a polyether alcohol which has been prepared predominantly from propylene oxide added onto a starter molecule of hydroxyl functionality from 2 to 4 and has a hydroxyl number of 44 to 90 mg KOH/g,
(A2.1) 30 to 15 parts of a polyether alcohol which has been prepared predominantly from propylene oxide added onto a starter molecule of hydroxyl functionality from 2 to 4 and has a hydroxyl number of 320 to 450 mg KOH/g,
(A5.1) 0.001 to 0.5 part of one or more catalysts for polyurethane formation,
(A3.1) 0.1 to 15 parts of a substance which improves thermal conductivity in micronized form, preferably silicon carbide, graphite or molybdenum sulfide having particle diameters in the range from 0.1 to 500 µm, and
(A4.1) 0.01 to 5 parts of a nanoscale sheet silicate having a particle size in the range from 50 to 650 nm
are mixed intimately, and the following are added to this mixture:
(B1.1) 25 to 42 parts of one or more diisocyanates,
(B2.1) 5 to 15 parts of a triisocyanate prepared preferably by trimerization of diisocyanates,
and this mixture in turn is mixed intimately, subjected to shaping and cured while being shaped.

11. The process as claimed in claim 8 or 9,
**characterized in that**
(A1.1) 40 to 60 parts of a polyether alcohol which has been prepared predominantly from propylene oxide added onto a starter molecule of hydroxyl functionality from 2 to 4 and has a hydroxyl number of 44 to 90 mg KOH/g,
(A2.1) 30 to 15 parts of a polyether alcohol which has been prepared predominantly from propylene oxide added onto a starter molecule of hydroxyl functionality from 2 to 4 and has a hydroxyl number of 320 to 450 mg KOH/g,
(A5.1) 0.001 to 0.5 part of one or more catalysts for polyurethane formation,
(A3.2) 0.1 to 15 parts of a substance which improves electrical conductivity in micronized form, preferably iodine-treated carbon, graphite or molybdenum sulfide having particle diameters in the range from 0.1 to 500 µm, and
(A4.1) 0.01 to 5 parts of a nanoscale sheet silicate having a particle size in the range from 50 to 650 nm
are mixed intimately, and the following are added to this mixture:
(B1.1) 25 to 42 parts of one or more diisocyanates,
(B2.1) 5 to 15 parts of a triisocyanate prepared preferably by trimerization of diisocyanates,
and this mixture in turn is mixed intimately, subjected to shaping and cured while being shaped.

12. The process as claimed in claim 8 or 9,
**characterized in that**
(A1.1) 40 to 60 parts of a polyether alcohol which has been prepared predominantly from propylene oxide added onto a starter molecule of hydroxyl functionality from 2 to 4 and has a hydroxyl number of 44 to 90 mg KOH/g,
(A2.1) 30 to 15 parts of a polyether alcohol which has been prepared predominantly from propylene oxide added onto a starter molecule of hydroxyl functionality from 2 to 4 and has a hydroxyl number of 320 to 450 mg KOH/g,
(A5.1) 0.001 to 0.5 part of one or more catalysts for polyurethane formation,
(A3.3) 2.5 to 15 parts of a substance which improves flame retardancy in micronized form, preferably melamine, melamine cyanurate, melamine-formaldehyde resin, urea-formaldehyde resin and/or polycyanurate resin having particle diameters in the range from 0.1 to 500 µm, and
(A4.1) 0.1 to 5 parts of a nanoscale sheet silicate having a particle size in the range from 50 to 650 nm
are mixed intimately, and the following are added to this mixture:
(B1.1) 25 to 42 parts of one or more diisocyanates,
(B2.1) 5 to 15 parts of a triisocyanate prepared preferably by trimerization of diisocyanates,
and this mixture in turn is mixed intimately, subjected to shaping and cured while being shaped.

13. The process as claimed in claim 8 or 9,
**characterized in that**
(A1.1) 40 to 60 parts of a polyether alcohol which has been prepared predominantly from propylene oxide added onto a starter molecule of hydroxyl functionality from 2 to 4 and has a hydroxyl number of 44 to 90 mg KOH/g,
(A2.1) 30 to 15 parts of a polyether alcohol which has been prepared predominantly from propylene oxide added onto a starter molecule of hydroxyl functionality from 2 to 4 and has a hydroxyl number of 320 to 450 mg KOH/g,
(A5.1) 0.001 to 0.5 part of one or more catalysts for polyurethane formation,
(A6) 3 to 18 parts of an aliphatic-aromatic polyester alcohol of hydroxyl number 180 to 320 mg KOH/g with aromatics content 2 to 23% by weight, and
(A4.1) 0.1 to 5 parts of a nanoscale sheet silicate having a particle size in the range from 50 to 650 nm
are mixed intimately, and the following are added to this mixture:
(B1.1) 25 to 42 parts of one or more diisocyanates,
(B2.1) 5 to 15 parts of a triisocyanate prepared preferably by trimerization of diisocyanates,
and this mixture in turn is mixed intimately, subjected to shaping and cured while being shaped.

14. The process as claimed in claim 8 or 9,
**characterized in that**
(A1.1) 40 to 60 parts of a polyether alcohol which has been prepared predominantly from propylene oxide added onto a starter molecule of hydroxyl functionality from 2 to 4 and has a hydroxyl number of 44 to 90 mg KOH/g,
(A2.1) 30 to 15 parts of a polyether alcohol which has been prepared predominantly from propylene oxide added onto a starter molecule of hydroxyl functionality from 2 to 4 and has a hydroxyl number of 320 to 450 mg KOH/g,
(A5.1) 0.001 to 0.5 part of one or more catalysts for polyurethane formation,
(A3.5) 0.1 to 5 parts of a modified native oil and
(A4.1) 0.01 to 5 parts of a nanoscale sheet silicate having a particle size in the range from 50 to 650 nm
are mixed intimately, and the following are added to this mixture:
(B1.1) 25 to 42 parts of one or more diisocyanates,
(B2.1) 5 to 15 parts of a triisocyanate prepared preferably by trimerization of diisocyanates,
and this mixture in turn is mixed intimately, subjected to shaping and cured while being shaped.

15. The process as claimed in claim 8 or 9,
**characterized in that**
(A1.2) 40 to 60 parts of a polyether alcohol which has been prepared predominantly from propylene oxide added onto a starter molecule of hydroxyl functionality from 2 to 4 and has a hydroxyl number of 44 to 90 mg KOH/g with in the range from 2 to 15% by weight of dispersed oligoureas of particle size 10 to 1000 nm,
(A2.2) 25 to 10 parts of a polyether alcohol which has been prepared predominantly from propylene oxide added onto a starter molecule of hydroxyl functionality from 2 to 4 and has a hydroxyl number of 320 to 450 mg KOH/g,
(A5.1) 0.001 to 0.5 part of one or more catalysts for polyurethane formation,
(A4.1) 0.01 to 5 parts of a nanoscale sheet silicate having a particle size in the range from 50 to 650 nm
are mixed intimately, and the following are added to this mixture:
(B1.1) 25 to 42 parts of one or more diisocyanates,
(B2.1) 5 to 15 parts of a triisocyanate prepared preferably by trimerization of diisocyanates,
and this mixture in turn is mixed intimately, subjected to shaping and cured while being shaped.

## Revendications

1. Gels de polyuréthane pouvant être préparés en faisant réagir un système de polyuréthane comprenant
(A1) un ou plusieurs alcools de polyéther lesquels ont été préparés par addition d'oxyde de propylène à une molécule de départ ayant une fonctionnalité hydroxyle entre 2 et 4 et lesquels présentent un indice d'hydroxyle de 28 à 90 mg KOH/g,
(A2) un ou plusieurs alcools de polyéther lesquels ont été préparés par addition d'oxyde de propylène à une molécule de départ ayant une fonctionnalité hydroxyle entre 2 et 4 et lesquels présentent un indice d'hydroxyle de 240 à 850 mg KOH/g,
(B1) un ou plusieurs diisocyanates,
(B2) un ou plusieurs triisocyanates lesquels ont été préparés, de préférence, par trimérisation de diisocyanates,
(A3) au moins un additif permettant d'atteindre un objectif préalablement défini, et
(A4) au moins un additif ayant une taille de particules de 1 à 650 nm
en présence d'un ou de plusieurs catalyseurs (A5) de formation de polyuréthane.

2. Gels de polyuréthane selon la revendication 1,
**caractérisés en ce que**
à titre d'alcool de polyéther (A1)
- on met en oeuvre un alcool de polyéther lequel a été préparé en greffant exclusivement de l'oxyde de propylène sur une unité de départ ayant une fonctionnalité de 2 à 4 et lequel présente un indice d'hydroxyle entre 44 et 90 mg KOH/g,
- on met en oeuvre, dans une quantité de 0,1 à 25 % en poids, un alcool de polyéther à longue chaîne contenant des oligo-urées, dans lequel les oligo-urées sont préparées par dépolymérisation de mousses souples à blocs en polyuréthane lesquelles subissent une Solvolyse en les exposant à un mélange d'au moins un glycol et d'au moins une amine aliphatique secondaire, et lequel présente une taille de particules comprise entre 1 et 1000 µm, ou
- on met en oeuvre, dans une quantité de 0,1 à 15 % en poids, un alcool de polyéther à longue chaîne contenant des oligo-urées, dans lequel les oligo-urées sont préparées par dépolymérisation de mousses souples à blocs en polyuréthane lesquelles subissent une solvolyse en les exposant à un mélange d'au moins deux glycols et d'au moins une amine aliphatique secondaire, et lequel présente une taille de particules comprise entre 1 et 1000 nm.

3. Gels de polyuréthane selon la revendication 1,
**caractérisés en ce que**
l'alcool de polyéther (A2)
- est un alcool de polyéther lequel a été préparé en greffant exclusivement de l'oxyde de propylène sur une unité de départ ayant une fonctionnalité de 2 à 4 et lequel présente un indice d'hydroxyle entre 350 et 850 mg KOH/g, ou
- est un alcool de polyéther lequel a été préparé en greffant exclusivement de l'oxyde de propylène sur une unité de départ ayant une fonctionnalité de 2 à 4 et un ester de polyéther lequel a réagi en quantité stoechiométrique insuffisante avec un acide dicarboxylique aliphatique et lequel présente un indice d'hydroxyle entre 340 et 420 mg KOH/g.

4. Gels de polyuréthane selon la revendication 1,
**caractérisés en ce que**
à titre de triisocyanate (B2), on met en oeuvre un mélange partiellement trimérisé d'au moins un diisocyanate aromatique et d'autres de nature aliphatique, araliphatique et/ou cycloaliphatique, le diisocyanate aromatique (B2) représentant de préférence 1 à 15 % en poids, par rapport audit mélange.

5. Gels de polyuréthane selon la revendication 1,
**caractérisés en ce que**
à titre de catalyseurs (A5), on met en oeuvre le bis-(diméthylaminaéthyl)éther, la pentaméthyldiéthylènetriamine, le dimorpholinodiéthyléther, la tris-(3-diméthylamino)propylamine, la pentaméthylpropylénetriamine, la N-méthyldicyclohexylamine, la N-méthylmorpholine, la N,N'-diméthylpipérazine et/ou 1-diméthylaminoéthyl-4-méthyl-pipérazine.

6. Gels de polyuréthane selon l'une des revendications 1 à 5,
**caractérisés en ce que**
ledit système de polyuréthane contient
(A1-1) 40 à 60 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 44 à 90 mg KOH/g,
(A2.1) 30 à 15 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 320 à 450 mg KOH/g,
(B1-1) 25 à 42 parts d'un ou de plusieurs diisocyanates,
(B2.1) 5 à 15 parts d'un triisocyanate lequel a été préparé, de préférence, par trimérisation de diisocyanates,
(A5.1) 0,001 à 0,5 parts d'un ou plusieurs catalyseurs de formation de polyuréthane
ainsi que, en outre,
(A3.1) 0,1 à 15 parts d'une matière sous forme micronisée améliorant la conductivité thermique, s'agissant préférentiellement de carbure de silicium ou de graphite ayant un diamètre de particules entre 0,1 et 500 µm, et
(A4.1) 0,01 à 5 parts d'un phyllosilicate à l'échelle nano ayant une taille de particules comprise entre 50 et 650 nm;
ou
(A3.2) 0,1 à 15 parts d'une matière sous forme micronisée améliorant la conductivité électrique, s'agissant préférentiellement de carbone traité au iode, de graphite ou de sulfure de molybdène ayant diamètre de particules entre 0,1 et 500 µm, et
(A4.1) 0,01 à 5 parts d'un phyllosilicate à l'échelle nano ayant une taille de particules comprise entre 50 et 650 nm;
ou
(A3.3) 1 à 15 parts d'un hydrocarbure à masse moléculaire élevée lequel est liquide, pâteux ou prend la forme d'un gel et lequel présente une capacité d'isolation électrique élevée, s'agissant préférentiellement d'une huile minérale ou de vaseline, et
(A4.1) 0,01 à 5 parts d'un phyllosilicate à l'échelle nano ayant une taille de particules comprise entre 50 et 650 nm;
ou
(A3.4) 2,5 à 15 parts d'une matière sous forme micronisée améliorant les qualités ignifugeantes, s'agissant préférentiellement de mélamine, de cyanurate de mélamine, de résine mélamine-formaldéhyde, de résine urée-formaldéhyde et/ou de résine de polycyanurate ayant une taille de particules entre 0,1 et 500 µm, et
(A4.1) 0,01 à 5 parts d'un phyllosilicate à l'échelle nano ayant une taille de particules comprise entre 50 et 650 nm;
ou
(A3.5) 0,1 à 5 parts d'une huile native modifiée et
(A4.1) 0,01 à 5 parts d'un phyllosilicate à l'échelle nano ayant une taille de particules comprise entre 50 et 650 nm.

7. Gels de polyuréthane selon l'une des revendications 1 à 5,
**caractérisés en ce que**
ledit système de polyuréthane contient
(A1.2) 40 à 60 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 44 à 90 mg KOH/g et lequel comporte entre 2 et 15 % en poids d'oligo-urées dispersées ayant une taille de particules de 10 à 1000 µm,
(A2.2) 25 à 10 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 320 à 450 mg KOH/g,
(B1.1) 25 à 42 parts d'un ou de plusieurs diisocyanates,
(B2.1) 5 à 15 parts d'un triisocyanate lequel a été préparé, de préférence, par trimérisation de diisocyanates,
(A5.1) 0,001 à 0,5 parts d'un ou plusieurs catalyseurs de formation de polyuréthane
et, en outre
(A3.5) 0,1 à 5 parts d'une huile native modifiée et
(A4.1) 0,01 à 5 parts d'un phyllosilicate à l'échelle nano ayant une taille de particules comprise entre 50 et 650 nm;
ou
(A4.1) 0,01 à 5 parts d'un phyllosilicate à l'échelle nano ayant une taille de particules comprise entre 50 et 650 nm.

8. Procédé de préparation de gels de polyuréthane selon la revendication 1,
**caractérisé en ce que** l'on mélange intimement
(A1) un alcool de polyéther ayant un ou plusieurs constituants, lequel est préparé majoritairement par addition d'oxyde de propylène à une molécule de départ ayant une fonctionnalité hydroxyle entre 2 et 4 et lequel présente un indice d'hydroxyle de 28 à 90 mg KOH/g,
(A2) un alcool de polyéther ayant un ou plusieurs constituants, lequel est préparé majoritairement par addition d'oxyde de propylène à une molécule de départ ayant une fonctionnalité hydroxyle entre 2 et 4 et lequel présente un indice d'hydroxyle de 240 à 850 mg KOH/g,
(A5) un ou plusieurs catalyseurs de formation de polyuréthane,
(A3) au moins un additif permettant d'atteindre un objectif préalablement défini, et
(A4) au moins un additif ayant une taille de particules comprise entre 1 et 650 nm
pour y mélanger ensuite
(B1) un ou plusieurs diisocyanates,
(B2) un ou plusieurs triisocyanates lesquels ont été préparés, de préférence, par trimérisation de diisocyanates,
dans un rapport molaire allant de 1:0,5 à 1:1,2 et ainsi obtenir par réaction un gel polyuréthane ayant une dureté Shore A entre 35 et 85.

9. Procédé selon la revendication 8,
**caractérisé en ce que**
l'on met en oeuvre, dans une quantité comprise de 0,1 à 25 % en poids, un alcool de polyéther (A1) à longue chaîne contenant des oligo-urées, dans lequel les oligo-urées sont préparées par dépolymérisation de mousses souples à blocs en polyuréthane lesquelles subissent une solvolyse en les exposant à un mélange d'au moins deux glycols et d'au moins une amine aliphatique secondaire, et lequel présente une taille de particules comprise de 1 à 1000 µm.

10. Procédé selon les revendications 8 ou 9,
**caractérisé en ce que** l'on mélange intimement
(A1.1) 40 à 60 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 44 à 90 mg KOH/g,
(A2.1) 30 à 15 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 320 à 450 mg KOH/g,
(A5.1) 0,001 à 0,5 parts d'un ou plusieurs catalyseurs de formation de polyuréthanne,
(A3.1) 0,1 à 15 parts d'une matière sous forme micronisée améliorant la conductivité thermique, s'agissant préférentiellement de carbure de silicium, de graphite ou de sulfure de molybdène ayant un diamètre de particules entre 0,1 et 500 µm, et
(A4.1) 0,01 à 5 parts d'un phyllosilicate à l'échelle nano ayant une taille de particules comprise entre 50 et 650 nm
pour ajouter au mélange ainsi obtenu
(B1.1) 25 à 42 parts d'un ou de plusieurs diisocyanates,
(B2.1) 5 à 15 parts d'un triisocyanate lequel a été préparé, de préférence, par trimérisation de diisocyanates,
et mélanger intimement le mélange ainsi obtenu, pour le soumettre à une mise en forme et le faire durcir durant la mise en forme.

11. Procédé selon les revendications 8 ou 9,
**caractérisé en ce que** l'on mélange intimement
(A1.1) 40 à 60 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 44 à 90 mg KOH/g,
(A2.1) 30 à 15 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 320 à 450 mg KOH/g,
(A5.1) 0,001 à 0,5 parts d'un ou plusieurs catalyseurs de formation de polyuréthane,
(A3.2) 0,1 à 15 parts d'une matière sous forme micronisée améliorant la conductivité électrique, s'agissant préférentiellement de carbone traité au iode, de graphite ou de sulfure de molybdène ayant diamètre de particules entre 0,1 et 500 µm, et
(A4.1) 0,01 à 5 parts d'un phyllosilicate à l'échelle nano ayant une taille de particules comprise entre 50 et 650 nm
pour ajouter au mélange ainsi obtenu
(B1.1) 25 à 42 parts d'un ou de plusieurs diisocyanates,
(B2.1) 5 à 15 parts d'un Triisocyanate lequel a été préparé, de préférence, par trimérisation de diisocyanates,
et mélanger intimement le mélange ainsi obtenu, pour le soumettre à une mise en forme et le faire durcir durant la mise en forme.

12. Procédé selon les revendications 8 ou 9,
**caractérisé en ce que** l'on mélange intimement
(A1.1) 40 à 60 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 44 à 90 mg KOH/g,
(A2.1) 30 à 15 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 320 à 450 mg KOH/g,
(A5.1) 0,001 à 0,5 parts d'un ou plusieurs catalyseurs de formation de polyuréthane,
(A3.3) 2,5 à 15 parts d'une matière sous forme micronisée améliorant les quantités ignifugeantes, s'agissant préférentiellement de mélamine, de cyanurate de mélamine, de résine mélamine-formaldéhyde, de résine urée-formaldéhyde et/ou de résine de polycyanurate ayant une taille de particules entre 0,1 et 500 µm, et
(A4.1) 0,1 à 5 parts d'un phyllosilicate à l'échelle nano ayant une taille de particules comprise entre 50 et 650 nm
pour ajouter au mélange ainsi obtenu
(B1.1) 25 à 42 parts d'un ou de plusieurs diisocyanates,
(B2.1) 5 à 15 parts d'un triisocyanate lequel a été préparé, de préférence, par trimérisation de diisocyanates,
et mélanger intimement le mélange ainsi obtenu, pour le soumettre à une mise en forme et le faire durcir durant la mise en forme.

13. Procédé selon la revendication 8 ou 9,
**caractérisé en ce que** l'on mélange intimement
(A1.1) 40 à 60 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 44 à 90 mg KOH/g,
(A2.1) 30 à 15 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 320 à 450 mg KOH/g,
(A5.1) 0,001 à 0,5 parts d'un ou plusieurs catalyseurs de formation de polyuréthane,
(A6) 3 à 18 parts d'un alcool de polyester aliphatique-aromatique ayant un indice d'hydroxyle de 180 à 320 mg KOH/g et une proportion de composés aromatiques de 2 à 23 % en poids, et
(A4.1) 0,1 à 5 parts d'un phyllosilicate à l'échelle nano ayant une taille de particules comprise entre 50 et 650 nm
pour ajouter au mélange ainsi obtenu
(B1.1) 25 à 42 parts d'un ou de plusieurs diisocyanates,
(B2.1) 5 à 15 parts d'un triisocyanate lequel a été préparé, de préférence, par trimérisation de diisocyanates,
et mélanger intimement le mélange ainsi obtenu, pour le soumettre à une mise en forme et le faire durcir durant la mise en forme.

14. Procédé selon les revendications 8 ou 9,
**caractérisé en ce que** l'on mélange intimement
(A1.1) 40 à 60 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 44 à 90 mg KOH/g,
(A2.1) 30 à 15 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 320 à 450 mg KOH/g,
(A5.1) 0,001 à 0,5 parts d'un ou plusieurs catalyseurs de formation de polyuréthane,
(A3.5) 0,1 à 5 parts d'une huile native modifiée, et
(A4.1) 0,01 à 5 parts d'un phyllosilicate à l'échelle nano ayant une taille de particules comprise entre 50 et 650 nm
pour ajouter au mélange ainsi obtenu
(B1.1) 25 à 42 parts d'un ou de plusieurs diisocyanates,
(B2.1) 5 à 15 parts d'un triisocyanate lequel a été préparé, de préférence, par trimérisation de diisocyanates,
et mélanger intimement le mélange ainsi obtenu, pour le soumettre à une mise en forme et le faire durcir durant la mise en forme.

15. Procédé selon les revendications 8 ou 9,
**caractérisé en ce que** l'on mélange intimement
(A1.2) 40 à 60 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 44 à 90 mg KOH/g et lequel comporte entre 2 et 15 % en poids d'oligo-urées dispersées ayant une taille de particules de 10 à 1000 nm,
(A2.2) 25 à 10 parts d'un alcool de polyéther lequel a été préparé majoritairement par addition d'oxyde de propylène à une molécule de départ ayant une fonctionnalité hydroxyle entre 2 et 4 et lequel présente un indice d'hydroxyle de 320 à 450 mg KOH/g,
(A5.1) 0,001 à 0,5 parts d'un ou plusieurs catalyseurs de formation de polyuréthane
(A4.1) 0,01 à 5 parts d'un phyllosilicate à l'échelle nano ayant une taille de particules comprise entre 50 et 650 nm
pour ajouter au mélange ainsi obtenu
(B1.1) 25 à 42 parts d'un ou de plusieurs diisocyanates,
(B2.1) 5 à 15 parts d'un Triisocyanate lequel a été préparé, de préférence, par trimérisation de diisocyanates,
et mélanger intimement le mélange ainsi obtenu, pour le soumettre à une mise en forme et le faire durcir durant la mise en forme.
